# EUROPEAN PATENT SPECIFICATION

(11) **EP 2 287 218 B1**
(45) Date of publication and mention of the grant of the patent: **03.12.2014**
(21) Application number: 10172631.3
(22) Date of filing: 12.08.2010
(51) Int. Cl.: C08F 220/18, C08F 220/30, C09D 11/00, C08F 212/14, C08F 226/06, C08F 220/06, C08F 220/34

(54) **Pigment dispersant, pigment dispersion and method for producing the same, ink composition, ink set, and image-forming method**
Pigmentdispergierstoff, Pigmentdispersion und Verfahren zu dessen Herstellung, Tintenzusammensetzung, Tintensatz und Bilderzeugungsverfahren
Dispersant de pigment, dispersion aqueuse de pigment et procédé de production correspondant, composition d'encre, ensemble d'encre et procédé de formation d'images

(30) Priority: 20.08.2009 JP 2009191352
(43) Date of publication of application: 23.02.2011
(73) Proprietor: Fujifilm Corporation, Minato-ku Tokyo (JP)
(72) Inventor: Kakino, Ryuki, Kanagawa (JP); Ishizuka, Takahiro, Kanagawa (JP); Ooishi, Yasufumi, Kanagawa (JP)
(74) Representative: Hoffmann Eitle

(56) References cited:
- EP-A1- 2 003 176
- WO-A2-2009/076567
- US-A- 5 648 405
- US-A1- 2009 233 093

## Description

### BACKGROUND OF THE INVENTION

### Field of the Invention

The present invention relates to an aqueous pigment dispersion containing a pigment dispersed therein and a method for producing the same, an ink composition, an ink set, an image-forming method, and a dispersant.

### Description of the Related Art

Inks have come to be water-based in accordance with recent increases in the need for resource protection, environmental protection, higher safety in operation, and the like. Qualities such as fluidity, storage stability, glossiness of coatings, clarity and coloring power are required for water-based inks in a similar manner as for oil-based inks.

However, ordinary dispersion methods cannot provide satisfactory qualities for water-based inks since most pigments are significantly inferior in water-based vehicles, as compared to the case of oil-based vehicles, in terms of suitability with regard to pigment dispersibility and the like. The use of various additives such as aqueous pigment-dispersing resins or surfactants has been investigated to solve such a problem, but there is still no water-based ink which satisfies the suitability with regard to pigment dispersibility and the like and is comparable to conventional high-quality oil-based inks.

In this connection, for example, there is disclosure of a water-based pigment ink which contains a pigment dispersion encapsulated by a polymer having an aromatic ring content of 20 to 70% by mass (for example, see US Patent Application Publication No. 2005/0124726).

In addition, there is disclosure of an inkjet-recording pigment ink containing a pigment dispersion in which a random copolymer of a hydrophilic monomer and a hydrophobic monomer in an amount of 50 to 80% by weight with respect to the polymer weight is used as a dispersant (for example, see US Patent Application Publication No. 2006/0014855).

On the other hand, there is disclosure of an aqueous pigment dispersant and a dispersion having suitability for use in a water-based coating material or water-based printing ink using, as a dispersant, a polymer to which anthraquinone or acridine is introduced for the purpose of improving non-aggregation properties and fluidity (for example, see Japanese Patent Application Laid-Open (JP-A) No. 9-77995).

However, with regard to the above-mentioned water-based pigment ink, the content of the aromatic ring contained in the polymer for encapsulating and dispersing the pigment is too high, so the ink prepared by the technique disclosed therein cannot satisfy various properties of an aqueous ink, such as redispersibility after the solvent component is decreased and the ink is solidified to a certain extent. In addition, with regard to the inkjet-recording pigment ink using a random copolymer as a dispersant, the dispersant polymer has excessively high hydrophilicity, so the ink prepared by the technique disclosed therein is highly viscous and is insufficient in stability over time of the viscosity and dispersion particle diameter.

Further, with regard to the aqueous pigment dispersant or the like using an anthraquinone or acridine-introduced polymer as a dispersant, there are problems in that the polymer is highly hydrophobic, the ink prepared by the technique disclosed therein exhibits a high viscosity, and it is difficult to achieve a dispersion of finer particles. The polymer disclosed therein is colored, and therefore, when it is applied as a dispersant, a color tone of the ink is changed.

Further, any of the aqueous inks prepared by any of the above-mentioned conventional techniques, when used as an inkjet recording ink, does not satisfy jetting stability and jetting recovery properties after jetting is terminated.

WO-2009/076567 discloses a dispersant polymer for use in an ink which is a random copolymer of for instance N,N-dimethylaminoethyl methacrylate, methacrylic acid and benzylmethacrylate.

US-A-5,648,405 teaches an aqueous ink jet ink composition comprising an aqueous carrier, a colourant and a random dispersant copolymer containing at least one carboxylic acid group and at least one amine base group. The copolymer may for instance be formed by copolymerising methacrylic acid, 2-dimethylaminoethyl methacrylate and phenylethyl methacrylate.

### SUMMARY OF THE INVENTION

### DETAILED DESCRIPTION OF THE INVENTION

The present invention has been completed based on the following findings obtained by the inventors.

The inventors have found that the selection of a nonionic hydrophilic group (not an ionic group) can confer appropriate hydrophilicity, and increase charge loss on the surface of the dispersed particles, that is, significantly decrease the zeta potential, when the environment (temperature, pH, etc.) around the surface of the dispersed particles (that is, a dispersant polymer covering the dispersed particles) is changed. Specifically, they have found that when an amino group unit is present together with an ionic unit (such as an acid group) and a hydrophobic unit in the molecular structure of a polymer used as a dispersant, water redispersibilty after dryness to some extend is obtained, and a change in the dispersion state is susceptible to a change in pH, thereby making it possible to significantly change the dispersion state.

Hereinafter, an aqueous pigment dispersion and a method for producing the same, an ink composition, an ink set, and an image-forming method in accordance with the present invention will be explained in greater detail. Further, a dispersant in accordance with the present invention will be described in more detail by way of such an explanation.

According to a first aspect, the present invention provides a pigment dispersant which is a random copolymer comprising:
a hydrophobic structural unit (a) represented by the following formula (b): 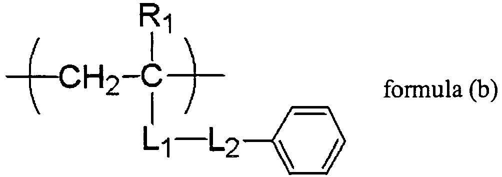
wherein R₁ represents a hydrogen atom or a methyl group; L₁ represents *-COO-with the symbol * indicating the connecting point with the main chain; and L₂ represents a divalent linking group containing an oxyalkylene group and having 1 to 12 carbon atoms;
a hydrophilic structural unit (b) having an ionic group; and
a structural unit (c) derived from an aliphatic amine or monocylic aromatic amine.

Preferably the hydrophobic structural unit (a) is derived from 2-phenoxyethyl acrylate or 2-phenoxyethyl methacrylate.

Preferably the ionic group in the hydrophilic structural unit (b) is an anionic group such as a carboxyl group, a phosphoric acid group or a sulphonic acid group.

Preferably the structural unit (c) includes a structural unit derived from an aliphatic tertiary amine.

According to a second aspect, the present invention provides an aqueous pigment dispersion comprising a pigment (A) and pigment dispersant as defined in the above first aspect.

According to a third aspect, the present invention provides a method for producing an aqueous pigment dispersion as defined in the above second aspect comprising:
adding an aqueous solution containing a basic substance to a mixture containing the pigment (A), the pigment dispersant (B) and an organic solvent (C) for dissolving or dispersing the pigment dispersant (B); and
removing the organic solvent (C) to obtain the dispersion.

According to a fourth aspect, the present invention provides an ink composition comprising the aqueous pigment dispersion as defined in the above second aspect.

According to a fifth aspect, the present invention provides an ink set comprising the ink composition as defined in the above fourth aspect and a treatment liquid containing an aggregating component for aggregating components in the ink composition.

According to a sixth aspect, the present invention provides an image-forming method comprising applying the ink composition of the above fourth aspect onto a recording medium and applying a treatment liquid containing an aggregating component for aggregating components in the ink composition onto the recording medium.

By containing, as a dispersant, a polymer having a hydrophobic structural unit having a specific structure and a hydrophilic structural unit, and further a structural unit derived from an aliphatic amine or monocyciic aromatic amine, the present invention is capable of achieving excellent water redispersibility, fine dispersion of a colorant, and superior stability over time. Further, when there is a change in the surrounding environment around the dispersant, polymer, the pH rises suddenly by the action of amino groups present in the polymer on the surface of dispersed particles, and therefore a charge loss (i.e., lowering of zeta potential) is increased on the surface of dispersed particles. That is, a change in the dispersion state becomes susceptible to a change in pH, and therefore it is possible to easily control a dispersion/aggregation state of the dispersed colorant (pigment, etc.) and the like. When the dispersed particles are aggregated, aggregation properties are enhanced.

### - (A) Pigment -

The aqueous pigment dispersion of the present invention contains at least one pigment.

Pigments are used from the viewpoint of light resistance.

There is no particular limitation to the pigment which may be appropriately selected according to the intended use, and may be an organic or inorganic pigment.

Examples of the organic pigment include azo pigments, polycyclic pigments, dye chelates, nitro pigments, nitroso pigments, and aniline black. Among them, azo pigments and polycyclic pigments are more preferable. Examples of the azo pigments include azo lakes, insoluble azo pigments, condensed azo pigments, and chelate azo pigments. Examples of the polycyclic pigment include phthalocyanine pigments, perylene pigments, perinone pigments, anthraquinone pigments, quinacridone pigments, dioxazine pigments, indigo pigments, thioindigo pigments, isoindoiinone pigments, and quinophthalone pigments. Examples of the dye chelates include basic dye chelates and acidic dye chelates.

Examples of the inorganic pigment include titanium oxide, iron oxide, calcium carbonate, barium sulfate, aluminum hydroxide, barium yellow, cadmium red, chrome yellow, and carbon black. Among them, carbon black is particularly preferable. The carbon black may be produced by a known method such as a contact method, a furnace method, or a thermal method.

Specific examples of carbon black include, but are not limited to, Raven 7000, Raven 5750, Raven 5250, Raven 5000 ULTRA II, Raven 3500, Raven 2000, Raven 1500, Raven 1250, Raven 1200, Raven 1190 ULTRA II, Raven 1170, Raven 1255, Raven 1080, Raven 1060 and Raven 700 (all manufactured by Columbian Carbon Company), Regal 400R, Regal 330R, Regal 660R, Mogul L, Black Pearls L, Monarch 700, Monarch 800, Monarch 880, Monarch 900, Monarch 1000, Monarch 1100, Monarch 1300 and Monarch 1400 (all manufactured by Cabot Corporation), Color Black FW1, Color Black FW2, Color Black FW2V, Color Black 18, Color Black FW200, Color Black S150, Color Black S160 Color Black S170, Printex 35, Printex U, Printex V, Printex 140U, Printex 140V, Special Black 6. Special Black 5, Special Black 4A and Special Black 4 (all manufactured by Degussa), and No. 25, No. 33, No. 40, No. 45, No. 47, No. 52, No. 900, No. 2200B, No. 2300, MCF-88, MA600, MA7, MA8 and MA100 (all manufactured by Mitsubishi Chemical Corporation).

Of the organic pigments, specific examples of yellow ink pigments include C. I. Pigment Yellow 1, 2, 3, 4, 5, 6, 7, 10, 11, 12, 13, 14, 14C. 16, 17, 24, 34, 35, 37, 42, 53, 55, 65, 73, 74, 75, 81, 83, 93, 95, 97, 98, 100, 101, 104, 108, 109, 110. 114. 117, 120, 128, 129, 138, 150, 151, 153, 154, 155, and 180. Examples of magenta ink pigments include C. I. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 48 (Ca), 48 (Mn), 48:2. 48:3, 48:4. 49. 49:1, 50, 51, 52, 52:2, 53:1, 53, 55, 57(Ca), 57:1, 60, 60:1. 63:1, 63:2, 64, 64:1, 81, 83, 87, 88, 89, 90, 101 (red oxide), 104, 105, 106, 108 (cadmium red), 112, 114, 122 (quinacridone magenta), 123, 146, 149, 163, 166, 168, 170, 172, 177, 178, 179, 184, 185, 190, 193, 202, 209. 219. 269, and C.I. Pigment Violet 19. Among them, C. I. Pigment Red 122 is particularly preferable. Examples of cyan ink pigments include C. I. Pigment Blue 1, 2, 3, 15, 15:1, 15:2, 15:3, 15:34, 16, 17:1, 22, 25, 56, 60, C. I. Vat Blue 4, 60, and 63. Among them. C. I. Pigment Blue 15:3 is particularly preferable.

These pigments may be used alone or in combination of two or more thereof selected from one or more product groups described above.

From the viewpoints of ink coloring properties and storage stability, the content of the pigment in the aqueous pigment dispersion is preferably in the range of 0.1 to 20% by mass, more preferably 0.2 to 15% by mass, and particularly preferably 0.5 to 10% by mass, with respect to the total solid mass of the dispersion.

### - (B) Polymer -

The aqueous colorant dispersion of the present invention contains at least one polymer. The polymer in the present invention has a hydrophobic structural unit (a) of formula (G) having an aromatic ring linked via a linking group to an atom included in the main chain, a hydrophilic structural unit (b) having an ionic group, a structural unit (c) derived from an aliphatic amine or monocyclic aromatic amine, and additionally another structural unit, if necessary. This polymer is used as a dispersant for the colorant (A) in an aqueous medium.

Hereinafter, individual structural units constituting the polymer will be described in more detail.

### <(a) Hydrophobic structural unit>

The polymer (B) of the present invention contains at least a hydrophobic structural unit (a) of formula (G) which contains an aromatic ring linked via a linking group to an atom included in the main chain of the polymer (hereinafter may be referred to simply as "hydrophobic structural unit (a)") as a hydrophobic structural unit. As used herein, the phrase "via a linking group" means that the aromatic ring is linked via a linking group to an atom included in the main chain of the polymer. Due to having such a structural configuration, an appropriate distance is maintained between the hydrophilic structural unit and the hydrophobic aromatic ring in the polymer (B). As a consequence, the polymer (B) readily interacts with and is firmly adsorbed to the colorant (A), which results in an improvement of the dispersibility.

When the polymer (B) in the present invention is a branched polymer such as a graft polymer, a comb polymer, or a star polymer, the atoms included in the so-called "side chain" or "branch polymer" of the graft polymer or comb polymer are also regarded as atoms included in the "main chain", and the atoms included in the "arm polymer" of the star polymer are also regarded as atoms included in the "main chain".

The content of the hydrophobic structural unit (a) having an aromatic ring linked via a linking group to an atom included in the main chain varies depending on the type of the aromatic ring. Within a specified range of the aromatic ring content, the content of the hydrophobic structural unit (a) is preferably 10% by mass or more but less than 90% by mass, more preferably 20% by mass or more but less than 85% by mass, and particularly preferably 30% by mass or more but less than 80% by mass, with respect to the total mass of the polymer (B). If the content of the hydrophobic structural unit (a) is 10% by mass or more, an adsorptivity of the dispersant to the pigment is favorable, and pigment atomization and dispersion stability are excellent. On the other hand, if the content of the hydrophobic structural unit (a) is 90% by mass or less, the dispersant does not become too hydrophobic and aggresability is maintained at a low level, thereby resulting in excellent dispersion stability.

As the hydrophobic structural unit (a) containing a benzene ring linked via a linking group to an atom included in the main chain of the polymer (B), the structure represented by the following formula (b) is used.

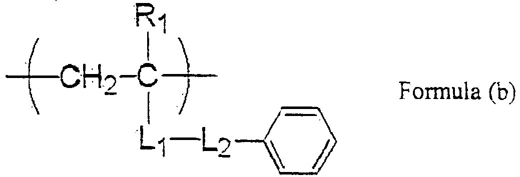

In the formula (b), R₁ represents a hydrogen atom or a methyl group; L₁ represents *-COO-: and the symbol * in the group represented by L₁ represents a connecting point with the main chain. L₂ represents a divalent linking group containing an oxyalkylene group and having 1 to 12 carbon atoms. Examples of the corresponding monomers include at least one selected from phenoxyethyl acrylate, phenoxyethyl methacrylate, and oligoethylene glycol monophenyl ether acrylates and methacrylates (the number of repeating units is 2 to 6). Among them, most preferred is 2-phenoxyethyl acrylate or 2-phenoxyethyl methacrylate.

When the structural unit represented by the formula (b) is a structural unit derived from phenoxyethyl acrylate or phenoxyethyl methacrylate, the total content of the structural unit derived from phenoxyethyl acrylate and the structural unit derived from phenoxyethyl methacrylate is preferably 40% by mass or more but 53% by mass or less, more preferably 42% by mass or more but 53% by mass or less, and particularly preferably 45% by mass or more but 53% by mass or less in the polymer (B).

### <(b) Hydrophilic structural unit>

The polymer (B) in the present invention contains at least one hydrophilic structural unit (b) containing an ionic group. The ionic group-containing structural unit (b) may be obtained through polymerization of ionic group-containing monomers, or introduction of an ionic group (anionic or cationic group) to the polymer chain after polymerization of monomers containing no ionic group.

Examples of the ionic group include anionic groups such as a carboxyl group, a sulfonic acid group and a phosphoric acid group, and cationic groups such as an amino group and an ammonium group. Among them, from the viewpoints of pigment atomization and dispersion stability, preferred are anionic groups as the ionic group, and more preferred are acid groups. Additionally, preferred are one or more acid groups selected from a carboxyl group, a sulfonic acid group, and a phosphoric acid group.

Examples of the anionic group-containing monomers and cationic group-containing monomers for introduction of the ionic group-containing hydrophilic structural unit (b) include, but are not limited to, the following monomers.

Of anionic group-containing monomers, examples of those containing a carboxyl group include unsaturated carboxylic acid monomers such as acrylic acid, methacrylic acid, crotonic acid, itaconic acid, maleic acid, fumaric acid, and citraconic acid, β-carboxyethyl acrylic acid, and 2-methacryloyloxymethyl succinic acid. Examples of the sulfonic acid group-containing monomer include styrene sulfonic acid, 2-acrylamide-2-methylpropane sulfonic acid, 3-sulfopropyl(meth)acrylate, and bis-(3-sulfopropyl)itaconate. Examples of the phosphoric acid group-containing monomer include vinyl phosphonic acid, vinyl phosphate, bis(methacryloxyethyl)phosphate, diphenyl-2-acryloyloxyethyl phosphate, diphenyl-2-methacryloyloxyethyl phosphate, and dibutyl-2-acryloyloxyethyl phosphate.

Examples of the cationic group-containing monomer include at least one selected from the group consisting of tertiary amine-containing vinyl monomers and ammonium salt-containing vinyl monomers.

Examples of the tertiary amine-containing vinyl monomers include N,N-dimethylaminoethyl(meth)acrylate, N,N-dimethylaminopropyl(meth)acrylate, N,N-diethylaminoethyl(meth)acrylate, N,N-dimethylaminopropyl(meth)acrylamide, vinyl pyrrolidone, 2-vinyl pyridine, 4-vinyl pyridine, 2-methyl-6-vinyl pyridine, and 5-ethyl-2-vinyl pyridine.

Examples of the ammonium salt-containing monomer include quaternized N,N-dimethylaminoethyl(meth)acrylate, quatemized N,N-diethylaminoethyl(meth)acrylate, and quatemized N,N-dimethylaminopropyl(meth)acrylate.

Among them, anionic monomers are preferable, and, from the viewpoints of viscosity and jetting properties of the ink, unsaturated carboxylic acid monomers are preferable, and acrylic acid and methacrylic acid are particularly preferable. The ionic group-containing monomers may be used alone or in combination of two or more thereof.

The content of the ionic group-containing hydrophilic structural unit (b) in the polymer (B) is preferably 1% by mass or more but less than 80% by mass, more preferably 2% by mass or more but less than 70% by mass, and particularly preferably 3% by mass or more but less than 60% by mass, with respect to the total mass of the polymer (B). If the content of the hydrophilic structural unit (b) is 1% by mass or more, charge repulsion in the aqueous dispersion is high, and pigment atomization and dispersion stability are excellent. On the other hand, if the content of the hydrophilic structural unit (b) is 80% by mass or less, water-solubility of the dispersant is maintained low, resulting in less separation of the dispersant from the pigment surface, and therefore excellent dispersion stability is obtained.

When the polymer (B) in the present invention contains an acidic group such as a carboxyl group, the acid value of the polymer (B) is preferably 5 mg KOH/g or more but less than 500 mg KOH/g, more preferably 10 mg KOH/g or more but less than 450 mg KOH/g, and particularly preferably 15 mg KOH/g or more but less than 400 mg KOH/g. When the acid value of the polymer (B) containing an acidic group such as a carboxylic acid group is 5 mg KOH/g or more, the charge repulsion of the dispersion caused by dissociated carboxyl groups is good, resulting in excellent dispersibility. On the other hand, if the acid value of the polymer (B) is 500 mg KOH/g or less, hydrophilicity of the polymer is lowered, resulting in adsorption thereof to the colorant, and consequently elution of the polymer into an aqueous medium is inhibited.

The acid value is defined herein as the mass (mg) of KOH necessary for completely neutralizing 1 g of the polymer (B), and measured by the method described in Japanese Industrial Standard (JIS K0070, 1992).

### <Structural unit (c) derived from aliphatic amine or monocyclic aromatic amine>

The polymer (B) in the present invention contains at least one structural unit (c) derived from an aliphatic amine or monocyclic aromatic amine. The aqueous colorant dispersion of the present invention exhibits good water redispersibility owing to the polymer (B) including the structural unit (c).

Details about the mechanism exhibiting good water redispersibility are unknown, but are considered as follows. That is, it is necessary to impart appropriate hydrophilicity to a dispersant adsorbing to the particle surface for imparting water redispersibility, but when hydrophilicity is imparted by ionic groups, this results in extremely high hydrophilicity, non-adsorption of the dispersant to the colorant, and a high tendency of the dispersant being eluted into an aqueous medium. However, appropriate hydrophilicity can be imparted by having a structure derived from an aliphatic amine or monocyclic aromatic amine which is a nonionic hydrophilic group, and as a result, hydrophilicity can be imparted to the dispersant without elution thereof into the aqueous medium.

In addition, when the aqueous colorant dispersion of the present invention is given (for example, marking), for example, as an ink composition to be described hereinafter, on a recording medium having an aggregating component (particularly, acidic compound), the structural unit (c) derived from an aliphatic amine or monocyclic aromatic amine exhibits a high interaction with an acid, and therefore a charge loss efficiency of the pigment particle surface is high and pigment dispersion particles readily aggregate together, thereby obtaining an image (recorded material) with less image bleeding.

The content of the structural unit (c) in the polymer (B) is preferably more than 1% by mass, more preferably more than 3% by mass but 80% by mass or less, even more preferably more than 5% by mass but 70% by mass or less, and particularly preferably 10% by mass or more but 60% by mass or less, with respect to the total mass of the polymer.

The structural unit (c) may be formed through polymerization of the corresponding monomers, or introduction of an aliphatic amine or monocyclic aromatic amine structure to the polymer chain after polymerization of the monomers.

The monomer for forming the structural unit (c) is not particularly limited as long as it contains a polymerizable functional group and a structure derived from an aliphatic amine or monocyclic aromatic amine, and may be selected from any known monomers. Specific examples of the monomer include dialkylamino group-containing (meth)acrylates such as N,N-dimethyl aminomethyl (meth)acrylate, N,N-diethyl aminoethyl (meth)acrylate, N,N-dimethyl aminoethyl (meth)acrylate, N,N-diethyl aminoethyl (meth)acrylate, N,N-dimethyl aminopropyl (meth)acrylate, N,N-dimethyl aminobutyl (meth)acrylate, p-N,N-dimethyl aminophenyl (meth)acrylate, p-N,N-diethyl aminophenyl (meth)acrylate, p-N,N-dipropyl aminophenyl (meth)acrylate, p-N,N-dibutyl aminophenyl (meth)acrylate, p-N-lauryl aminophenyl (meth)acrylate, p-N-stearyl aminophenyl (meth)acrylate, p-N,N-dimethyl aminobenzyl (meth)acrylate, p-N,N-diethyl aminobenzyl (meth)acrylate, p-N,N-dipropyl aminobenzyl (meth)acrylate, p-N,N-dibutyl aminobenzyl (meth)acrylate, p-N-lauryl aminohenzyl (meth)acrylate, and p-N-stearyl aminobenzyl (meth)acrylate. Further examples of such a monomer include dialkylamino group-containing (meth)acrylamides such as N,N-dimethyl aminoethyl (meth)acrylamide, N,N-diethyl aminoethyl (meth)acrylamide, N,N-dimethyl aminopropyl (meth)acrylamide, N,N-diethyl aminopropyl (meth)acrylamide, p-N,N-dimethyl aminophenyl (meth)acrylamide, p-N,N-diethyl aminophenyl (meth)acrylamide, p-N,N-dipropyl aminophenyl (meth)acrylamide, p-N,N-dibutyl aminophenyl (meth)acrylamide, p-N-lauryl aminophenyl (meth)acrylamide, p-N-stearyl aminophenyl (meth)acrylamide, p-N,N-dimethyl aminobenzyl (meth)acrylamide, p-N,N-diethyl aminobenzyl (meth)acrylamide, p-N,N-dipropyl aminobenzyl (meth)acrylamide, p-N,N-dibutyl aminobenzyl (meth)acrylamide, p-N-lauryl aminobenzyl (meth)acrylamide, and p-N-stearyl aminobenzyl (meth)acryiamide.

Further, examples of such a monomer include monocyclic aromatic amine structure-containing monomers such as vinyl pyridine, vinyl pyrrole, vinyl indole, vinyl tetrahydro indole, vinyl imidazole, vinyl triazole, vinyl tetrazole, (meth)acryloyloxy ethyl pyridine, (meth)acryloyloxy ethyl pyrrole, (meth)acryloyloxy ethyl indole, (meth)acryloyloxy ethyl tetrahydro indole, (meth)acryloyloxy ethyl imidazole, (meth)acryloyloxy ethyl triazole, and (meth)acryloyloxy ethyl tetrazole.

Among these monomers, from the viewpoint of controlling dispersibility, preferred is a monomer having an aliphatic amine structure, particularly a monomer having a diallyl amino group (alkyl moiety contains 1 to 8 carbon atoms), and more preferred is a monomer containing an aliphatic amino group having a tertiary amino group. Additionally, it is more preferable to use (meth)acrylate containing a dialkylamino group (alkyl moiety contains 1 to 8 carbon atoms).

The polymer (B) in the present invention may be a random or block copolymer wherein the structural units are arranged randomly or regularly. When the polymer (B) is a block copolymer, the order of the introduction of the structural units is arbitrary, and the copolymer may contain two or more blocks of identical components. From the viewpoints of versatility and manufacturability, a random copolymer is preferable.

Among the polymer (B) in the present invention, it is preferred that the hydrophobic structural unit (a) is a structural unit represented by the formula (b) wherein R₁ represents a hydrogen atom or a methyl group, L₁ represents -COO-, and L₂ represents a divalent linking group containing an oxyalkylene group and having 1 to 12 carbon atoms, the hydrophilic structural unit (b) is a structural unit derived from a monomer having one or more acid groups selected from a carboxyl group, a sulfonic acid group, and a phosphoric acid group, and the structural unit (c) is a structural unit derived from (meth)acrylate containing a dialkyl amino group (alkyl moiety contains 1 to 8 carbon atoms).

The molecular weight of the polymer (B) used in the present invention is preferably in the range of 1000 to 1000000 in terms of weight average molecular weight (Mw), more preferably 2000 to 500000, and even more preferably 3000 to 150000. The molecular weight within the above-specified range is preferable from the viewpoint that the polymer (B) exhibits good steric repulsion effects of a dispersant, and the steric effects reduce the time necessary for the adsorption to a colorant.

The molecular weight distribution (which is expressed as weight average molecular weight/number average molecular weight) of the polymer used in the present invention is preferably in the range of 1 to 6, and more preferably 1 to 4. The molecular weight distribution within the above-specified range is preferable from the viewpoint that the time necessary for the dispersion of the pigment is reduced, and the stability over time of the dispersion is improved.

Herein, the number average molecular weight and weight average molecular weight are determined by the differential refractometer detection with THF as a solvent in a GPC analyzer using columns of TSK gel GMHxL, TSK gel G4000 HxL, and TSK gel G2000HxL (trade names, all are manufactured by Tosoh Corporation). For the conversion, polystyrene was used as the reference material.

The polymer (B) used in the present invention may be synthesized by various polymerization methods, for example, solution polymerization, precipitation polymerization, suspension polymerization, precipitation polymerization, bulk polymerization, or emulsion polymerization. The polymerization reaction may be carried out under a known system, such as a batch, semi-continuous, or continuous system.

Initiation of the polymerization may be carried out with a radical initiator, or photoirradiation or irradiation. These methods of polymerization and initiation of polymerization are described in, for example, "Kobunshi Gosei Hoho (Synthetic Methods for Polymers)" by Teiji Tsuruta, Revised Edition (published by Nikkan Kogyo Shimbun, Ltd., 1971) and "Kobunshi Gosei no Jikkenho (Experimental Methods in Polymer Synthesis)" by Takayuki Otsu and Masaetu Kinoshita (published by Kagaku-Dojin Publishing Co., Inc., 1972) pp. 124 to 154.

Among these polymerization methods, a solution polymerization method using a radical initiator is particularly preferable. Examples of the solvent used in the solution polymerization method include various organic solvents such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol, and 1-butanol. These solvents may be used alone or in combination of two or more thereof, or may be mixed with water.

The polymerization temperature is chosen in consideration of the molecular weight of the intended polymer and the type of the initiator. The polymerization temperature is usually in the range of 0°C to 100°C, and preferably 50°C to 100°C. The reaction pressure may be appropriately selected, and is usually in the range of 1 to 100 kg/cm², and particularly preferably 1 to 30 kg/cm². The reaction period may be about 5 to 30 hours. The resultant resin may be subjected to purification treatment such as reprecipitation.

Preferred specific examples (Exemplified Compounds P-1 to P-14) of the polymer (B) are shown below. The present invention is not limited to the following Exemplified Compounds. The symbols a, b, and c in the following formulae may be arbitrarily selected within the above-specified weight average molecular weight (Mw).

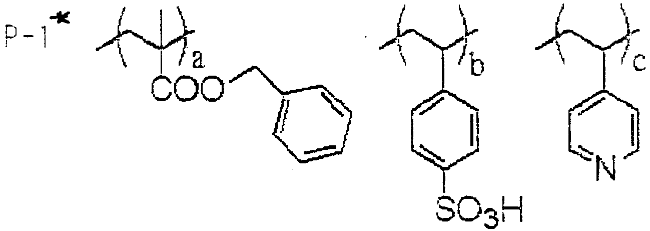

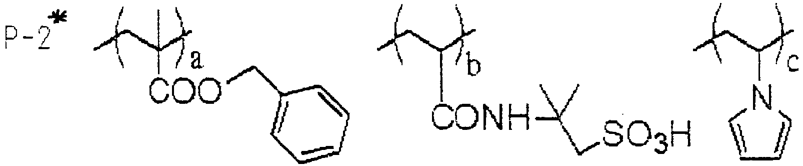

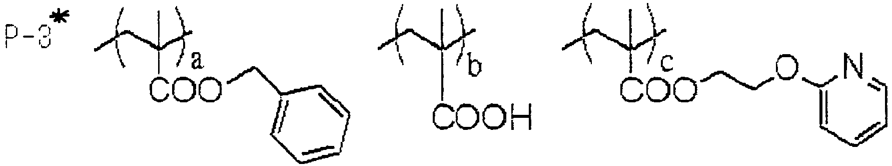

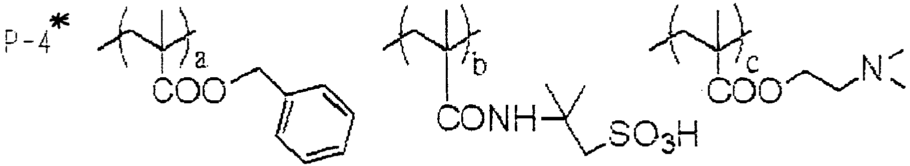

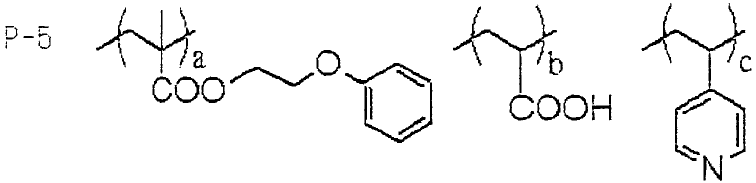

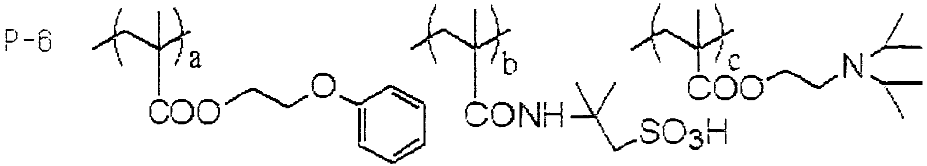

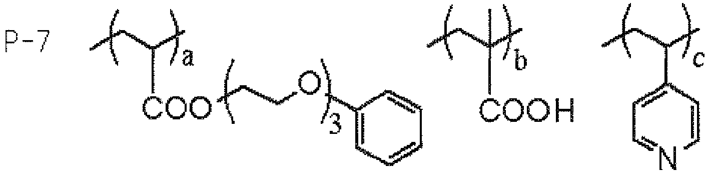

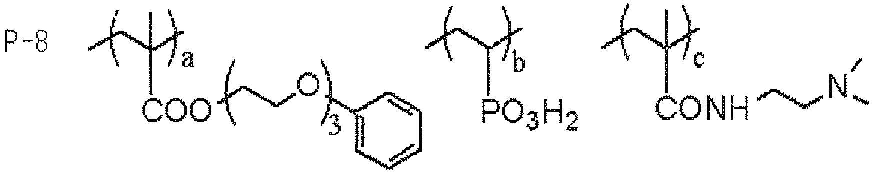

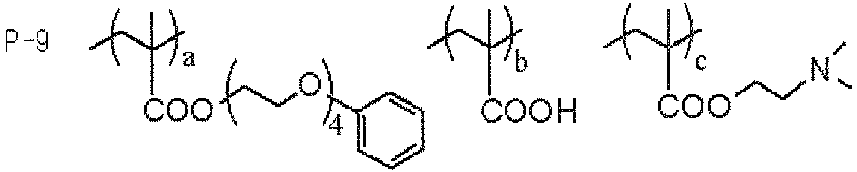

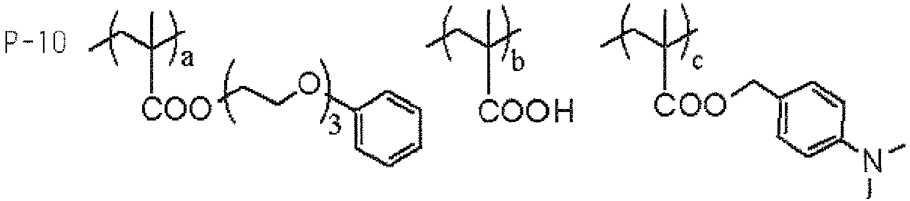

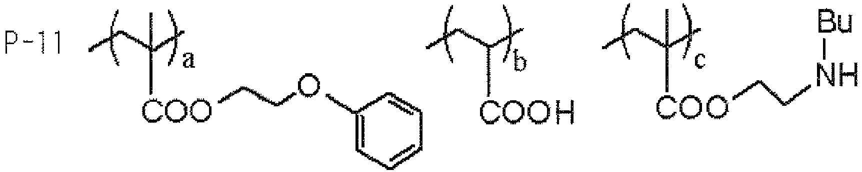

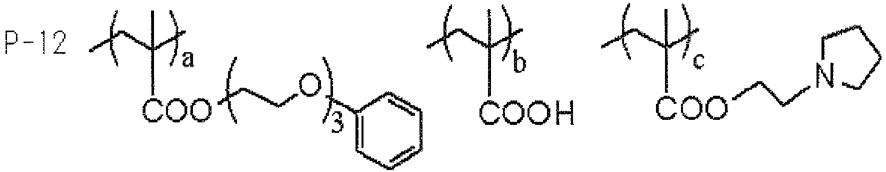

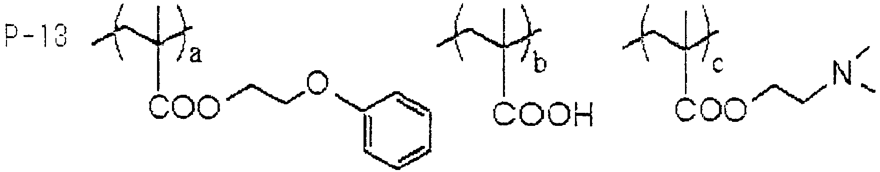

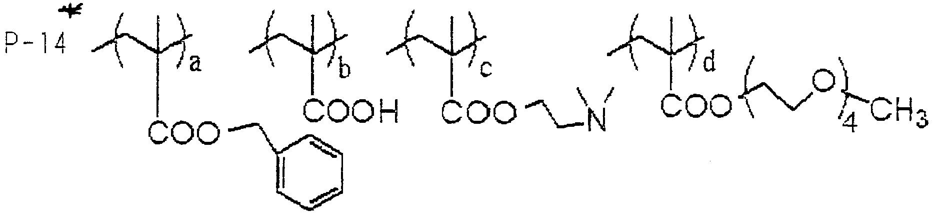

In the above, "*" indicates a polymer which is not in accordance with the present invention.

The content of the polymer (B) in the aqueous colorant dispersion is preferably in the range of 10 to 200% by mass, more preferably 20 to 150% by mass, and particularly preferably 30 to 120% by mass, with respect to the mass of the colorant. If the content of the polymer (B) is 10% by mass or more, water redispersibility after removal of the solvent or water to a certain degree, and aggregation properties upon aggregation of dispersed particles are good. If the content of the polymer (B) is 200% by mass or less, the viscosity can be kept low, thus being advantageous from the viewpoint of jetting stability.

### - Aqueous liquid medium -

The aqueous colorant dispersion of the present invention contains at least water as an aqueous liquid medium, and may further contain a water-soluble organic solvent. The water-soluble organic solvent can serve as an anti-drying agent, a humectant, or a penetration enhancing agent. Specifically, incorporation of the water-soluble organic solvent as the anti-drying agent can prevent, for example, clogging of nozzles caused by drying of the ink using the aqueous colorant dispersion at ink injection ports of the nozzles. Upon incorporation of the water-soluble organic solvent as an anti-drying agent or humectant, preferred is a water-soluble organic solvent having a lower vapor pressure than water. Incorporation of the water-soluble organic solvent as a penetration enhancing agent can promote the penetration of the inkjet ink into paper.

Examples of the warer-soluble organic solvent include: alkanediols (polyhydric alcohols) such as glycerin, 1,2,6-hexanetriol, trimethylolpropane, ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; sugars such as glucose, mannose, fructose, ribose, xylose, arabinose, galactose, aldonic acid, glucitol, maltose, cellobiose, lactose, sucrose, trehalose, and maltotriose; sugar alcohols; hyaluronic acids; so-called solid humectants such as ureas; alkyl alcohols having 1 to 4 carbon atoms, such as ethanol, methanol, butanol, propanol, and isopropanol; glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxy butanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether; 2-pyrrolidone, N-methyl-2-pyrrolidone, 1,3-dimethyl-2-imidazolidinone, formamide, acetamide, dimethyl sulfoxide, sorbit, sorbitan, acetin, diacetin, triacetin, and sulfolane. These organic solvents may be used alone or in combination of two or more thereof.

As an anti-drying agent or a humectant, polyhydric alcohols are useful. Examples of the polyhydric alcohols include glycerin, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, and 1,2,6-hexanetriol. These polyhydric alcohols may be used alone or in combination of two or more thereof.

As a penetration enhancing agent, polyol compounds are preferable and aliphatic diols are suitable. Examples of the aliphatic diols include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, 2-ethyl-1,3-hexanediol, and 2,2,4-trimethyl-1,3-pentanediol. Among them, 2-ethyl-1,3-hexanediol and 2,2,4-trimethyl-1,3-pentanediol are preferable.

The water-soluble organic solvents may be used alone or in combination of two or more thereof. The content of the water-soluble organic solvent is 1% by mass or more but 60% by mass or less, and preferably 5% by mass or more but 40% by mass or less, with respect to the total mass of the aqueous colorant dispersion.

The amount of water contained in the aqueous colorant dispersion is not particularly limited, preferably 10% by mass or more but 99% by mass or less, more preferably 30% by mass or more but 80% by mass or less, and even more preferably 50% by mass or more but 70% by mass or less.

The content of the aqueous liquid medium in the aqueous pigment dispersion of the present invention is preferably in the range of 1 to 70% by mass, more preferably 2 to 60% by mass, and particularly preferably to 50% by mass, from the viewpoints of anti-drying properties, permeability through the adherend, and liquid properties such as viscosity. When the content of the aqueous liquid medium is within the above-specified range, the liquid properties of the aqueous colorant dispersion, such as drying speed, permeability through the adherend, and viscosity, can be adjusted in appropriate states.

### (Production method of aqueous pigment dispersion)

The method of the present invention for producing an aqueous pigment dispersion is a method for producing the above-mentioned aqueous pigment dispersion of the present invention, and specifically includes adding an aqueous solution (III) containing a basic substance to a mixture (II) containing a colorant (A), a polymer (B), and an organic solvent (C) capable of dissolving or dispersing the polymer (B) (mixing and hydration step), and then removing the organic solvent (C) therefrom (solvent removal step).

According to the method of the present invention for producing an aqueous colorant dispersion, the pigment is finely dispersed, and thus an aqueous pigment dispersion having excellent storage stability is produced.

The organic solvent (C) is capable of dissolving or dispersing the polymer (B). In addition, the organic solvent (C) preferably has some affinity for water. Specifically, the solubility of the organic solvent (C) in water at 20°C is preferably 10% by mass or more but 50% by mass or less.

More specifically, the aqueous pigment dispersion of the present invention may be produced by a production method including the following steps (1) and (2). However, the present invention is not limited thereto.

Step (1): dispersion of a mixture containing a pigment (A), a polymer (B), an organic solvent (C) capable of dissolving or dispersing the polymer (B), and a solution (III) containing a basic substance, and water as a main component; and

Step (2): removal of the organic solvent (C).

In the step (1), firstly, the polymer (B) is dissolved or dispersed in the organic solvent (C) to obtain a mixture (II) (mixing step). Secondly, the pigment (A), the solution (III) containing a basic substance, and water as a main component, water and if necessary, a surfactant or the like are added to the mixture (II), and mixed and dispersed to obtain an oil-in-water type aqueous pigment dispersion.

There is no particular limitation to the degree of neutralization. In usual cases, the final aqueous pigment dispersion preferably has, for example, a pH of 4.5 to 10. The pH may be determined according to the desirable degree of neutralization of the water-insoluble vinyl polymer.

The pigment (A), polymer (B), and other additives used in the production method of an aqueous colorant dispersion are the same as those mentioned above in the section of the aqueous colorant dispersion, and preferred examples thereof are also the same.

Preferred examples of the organic solvent (C) include alcohol-based solvents, ketone-based solvents, and ether-based solvents. Among them, examples of the alcohol-based solvents include ethanol, isopropanol, n-butanol, tertiary butanol, isobutanol, and diacetone alcohol. Examples of the ketone-based solvents include acetone, methyl ethyl ketone, diethyl ketone, and methyl isobutyl ketone. Examples of the ether-based solvents include dibutyl ether, tetrahydrofuran, and dioxane. Among these solvents, isopropanol, acetone, and methyl ethyl ketone are preferable, and methyl ethyl ketone is particularly preferable. These organic solvents (C) may be used alone or in combination of two or more thereof.

In the production of the aqueous colorant dispersion, kneading and dispersing treatment may be carried out under strong shearing force, by use of a double roll, a triple roll, a ball mill, a tron mill, a disperser, a kneader, a co-kneader, a homogenizer, a blender, a uniaxial or biaxial extruder. Details about the kneading and dispersion are described in, for example, "Paint Flow and Pigment Dispersion" by T. C. Patton, (1964, published by John Wiley and Sons).

If necessary, the dispersion is finely dispersed together with beads made of glass or zirconia having a particle diameter of 0.01 to 1 mm, using a vertical or horizontal sand grinder, a pin mill, a slit mill or an ultrasound dispersing machine.

In the method for producing an aqueous pigment dispersion in accordance with the present invention, the method for removing the organic solvent is not particularly limited, and a known method may be used such as distillation under reduced pressure.

With regard to the aqueous pigment dispersion of the present invention and the production method thereof, an average particle diameter of the colorant is preferably 10 nm or more but less than 200 nm, more preferably 50 nm or more but less than 130 nm, and even more preferably 60 nm or more but less than 100 nm. When the average particle diameter is within the above-specified range, good color developability, dispersion stability, and jetting stability during jetting are provided. The average particle diameter of the dispersed particles of the colorant is a value measured by a dynamic light scattering method.

The aqueous pigment dispersion of the present invention is useful, for example, as an ink composition suitable for inkjet recording as will be described below, or an aqueous ink for writing instruments such as water-based ballpoint pens and marking pens. In this case, in order to prevent an inkjet nozzle or a pen tip from clogging by drying, a low-volatile or nonvolatile solvent selected from the above-described water-soluble organic solvents may be added to the aqueous colorant dispersion. In addition, in order to improve penetrability into a recording medium, a volatile solvent may be added.

### <Ink composition>

The ink composition in accordance with the present invention contains a pigment (A), a polymer (B) including a hydrophobic structural unit (a) of formula (b) having an aromatic ring linked via a linking group to an atom included in the main chain, a hydrophilic structural unit (b) having an ionic group, and a structural unit (c) derived from an aliphatic amine or monocyclic aromatic amine, and usually an aqueous liquid medium. In addition, the ink composition may preferably contain a polymerization initiator, a polymerizable compound, and if necessary, other components such as resin particles.

The ink composition of the present invention may be produced by any method, as long as it is a method which is capable of producing the desired composition in a manner that at least the pigment (A) and the polymer (B) are contained. The ink composition of the present invention can be produced, for example, by diluting the above-mentioned aqueous pigment dispersion of the present invention *per se* or together with the addition of an anti-drying agent or other additives if necessary, in an aqueous liquid medium.

Details and preferred embodiments of pigment (A) and polymer (B) are the same as in the aqueous colorant dispersion as described above.

The content of the pigment in the ink composition is preferably in the range of 0.1 to 20% by mass, and more preferably 0.5 to 10% by mass from the viewpoints of ink coloring properties, storage stability, and jetting properties.

The content of the polymer (B) in the ink composition is preferably in the range of 1 to 150% by mass, and more preferably 5 to 100% by mass with respect to the pigment, from the viewpoints of the dispersibility, storage stability, and jetting properties of the ink composition.

### - Resin particle -

The ink composition of the present invention may contain at least one resin particles. Incorporation of the resin particles can improve fixability and rub-off resistance of the image.

Examples of the resin particles include those composed of acrylic resins, vinyl acetate-based resins, styrene-butadiene-based resins, vinyl chloride-based resins, acryl-styrene-based resins, butadiene resins, styrene resins, crosslinked acrylic resins, crosslinked styrene resins, benzoguanamine resins, phenolic resins. silicone resins, epoxy resins, urethane-based resins, paraffin-based resins, or fluorine-based resins. The resin particles in the form of latex thereof may be used in the ink composition. Among them, particles of acrylic resins, acryl-styrene-based resins, styrene resins, crosslinked acrylic resins, and crosslinked styrene resins are preferable.

The weight average molecular weight of the resin particles is preferably in the range of 10000 or more but 200000 or less, and more preferably 100000 or more but 200000 or less. The average particle diameter of the resin particles is preferably in the range of 10 nm to 1 µm in terms of volume average particle diameter, more preferably 10 to 200 nm, even more preferably 20 to 100 nm, and particularly preferably 20 to 50 nm.

The resin particles are not particularly limited as to their particle diameter distribution, and may have a broad particle diameter distribution or a monodispersed particle diameter distribution. Alternatively, a mixture of two or more kinds of resin particles each having a monodispersed particle diameter distribution may be used.

The glass transition temperature (Tg) of the resin particles is preferably 30°C or higher, more preferably 40°C or higher, and even more preferably 50°C or higher.

The content of the resin particles in the ink composition is preferably 20% by mass or less, and more preferably 15% by mass or less, with respect to the total mass of the ink composition.

### - Aqueous UV curable material -

The ink composition of the present invention may further contain a water-soluble polymerizable compound having an ethylenically unsaturated bond and a polymerization initiator as aqueous UV curable materials, in addition to the above-mentioned components. By incorporation of the polymerizable compound and the polymerization initiator, the ink composition can be configured as an ultraviolet (UV)-curable type, and fixability and rub-off resistance of the image thus formed can be further improved.

Each of polymerizable compounds and polymerization initiators may be used alone or in combination of two or more thereof.

### (Polymerizable compound)

The polymerizable compound may be a water-soluble compound (hereinafter may be referred to as "specific polymerizable compound") having an ethylenically unsaturated double bond, and examples thereof include water-soluble compounds (for example, which may be any one of chemical forms such as monomers, oligomers, and polymers) having at least one radical-polymerizable ethylenically unsaturated bond in the molecule thereof. The specific polymerizable compounds may be used alone in the ink composition or in combination of two or more thereof in a certain ratio for the purpose of improving the desired properties. Preferably, a combination of two or more polymerizable compounds is preferable from the viewpoint of controlling performance such as reactivity and physical properties.

The specific polymerizable compound is preferably dissolved in distilled water at room temperature at a concentration of 2% by mass or more, and more preferably 15% by mass or more, and is particularly preferably homogeneously mixed with water in any ratio.

Examples of the specific polymerizable compound include esters and amides of unsaturated carboxylic acids such as acrylic acid, methacrylic acid, itaconic acid, crotonic acid, isocrotonic acid, and maleic acid, anhydrides having an ethylenically unsaturated group, acrylonitrile, styrene, various unsaturated polyesters, unsaturated polyether, unsaturated polyamide, unsaturated urethane, vinyl ether, and allyl ether. Preferred are esters or amides of acrylic acid or methacrylic acid.

The specific polymerizable compound is preferably a compound having a poly(ethyleneoxy) chain, a poly(propyleneoxy) chain, or an ionic group (for example, a carboxyl group, a sulfo group, etc.), in order to impart water-solubility. When the compound has a poly(ethyleneoxy) chain or a poly(propyleneoxy) chain, the number of the ethyleneoxy or propyleneoxy units is preferably in the range of 1 to 10, and more preferably 1 to 5. If a length of the chain is within the above-specified range, it is possible to secure hardness of the film when cured or the adhesion to a recording medium while achieving water-solubility.

With regard to the specific polymerizable compound, for the purpose of further improving the sensitivity, bleeding, and adhesion to a recording medium, preferred is an embodiment wherein the radical polymerizable compound is a combination of a monoacrylate with a polyfunctional acrylate monomer or polyfunctional acrylate oligomer having a molecular weight of 400 or more, and preferably 500 or more. Particularly in the case of an ink composition for use in recording on a flexible recording medium such as PET film or PP film, a combination of a monoacrylate selected from the above-mentioned compound group, with a polyfunctional acrylate monomer or a polyfunctional acrylate oligomer is preferable from the viewpoint of enhancing the film strength while imparting flexibility to the film, and increasing the adhesion. Further, preferred is an embodiment using a combination of at least three polymerizable compounds of a monofunctional monomer, a bifunctional monomer, and a polyfunctional monomer which is trifunctional or higher, from the viewpoints of further improving the sensitivity, bleeding, and adhesion to the recording medium while maintaining the safety.

Particularly preferred specific examples of the specific polymerizable compound include compounds having the following structures (Exemplified Compounds 2-I to 2-4). However, the present invention is not limited thereto.

### - Exemplified Compound 2-1

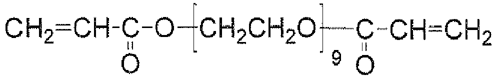

### - Exemplified Compound 2-2

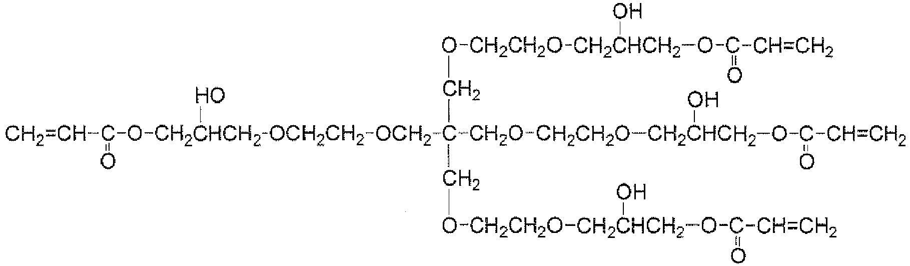

### - Exemplified Compound 2-3

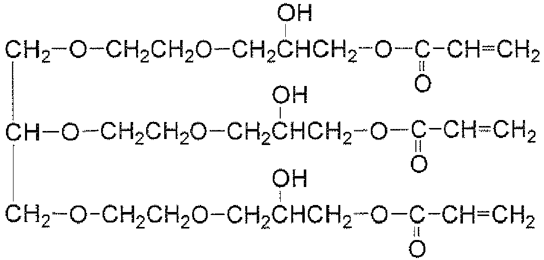

### - Exemplified Compound 2-4

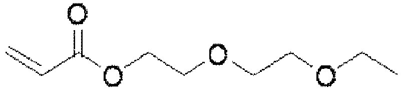

### - Polymerization initiator -

There is no particular limitation to the polymerization initiator, as long as it has a good polymerization initiation capacity in combination with a specific sensitizing dye. The polymerization initiator may be selected from known polymerization initiators. Among the polymerization initiators, a water-soluble initiator is preferable. As to an extent of "water-soluble", the initiator exhibits preferably a solubility of 0.5% by mass or more in distilled water at 25°C, more preferably 1% by mass or more, and particularly preferably 3% by mass or more.

Among the polymerization initiators, preferred is a polymerization initiator selected from the group consisting of an α-amino ketone-based compound and an acyl phosphine oxide-based compound.

As the α-amino ketone-based compound, it is preferable to use a compound having the structure represented by the following formula (1).

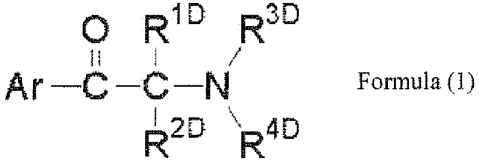

In the formula (1), Ar represents a phenyl group which is substituted with -SR¹³ or-N(R^{7E})(R^{8E}), and R¹³ represents a hydrogen atom or an alkyl group. R^{7E} and R^{8E} each independently represent a hydrogen atom, an alkyl group having 1 to 12 carbon atoms, an alkyl group having 2 to 4 carbon atoms and substituted with alkoxy having 1 to 4 carbon atoms, or an alkenyl group having 3 to 5 carbon atoms. R^{7E} and R^{8E} may be bonded to each other to form an alkylene group having 3 to 7 carbon atoms, wherein the alkylene group may contain -O- or -N(R¹²)- in the alkylene chain. R¹² represents an alkyl group having 1 to 4 carbon atoms.

R^{1D} and R^{2D} each independently represent an alkyl group having 1 to 8 carbon atoms. R^{1D} and R^{2D} may be bonded to each other to form an alkylene group having 2 to 9 carbon atoms. R^{3D} and R^{4D} each independently represent a hydrogen atom, an alkyl group having 1 to 12 carbon atoms, an alkyl group having 2 to 4 carbon atoms and substituted with alkoxy having 1 to 4 carbon atoms, or an alkenyl group having 3 to 5 carbon atoms. Here, R^{3D} and R^{4D} may be bonded to each other to form an alkylene group having 3 to 7 carbon atoms, wherein the alkylene group may contain -O- or -N(R¹²)- in the alkylene chain. R¹² represents an alkyl group having 1 to 4 carbon atoms.

Examples of the compound, encompassed by the α-amino ketone-based compound include 2-methyl-1-phenyl-2_morpholinopropan-1-one, 2-methyl-1-[4-(hexyl)phenyl]-2-morpholinopropan-1-one, and 2-ethyl-2-dimethyl amino-1-(4-morpholinophenyl)-butanone-1. In addition, Irgacure series (manufactured by Ciba-Geigy Ltd.), for example Irgacure 907, Irgacure 369, and Irgacure 379 are commercially available, which are also included in the α-amino ketone-based compounds.

The acyl phosphine oxide-based compound is preferably a compound represented by the following formula (2) or formula (3).

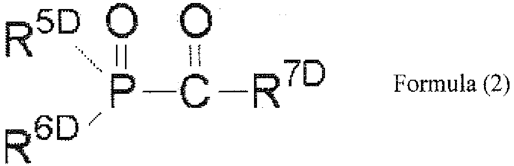

In the formula (2), R^{5D} and R^{6D} each independently represent an aliphatic group, an aromatic group, an aliphatic oxy group, an aromatic oxy group, or a heterocyclic group, and R^{7D} represents an aliphatic group, an aromatic group, or a heterocyclic group.

Examples of the aliphatic group represented by R^{5D}, R^{6D}, or R ^{7D} include an alkyl group, a substituted alkyl group, an alkenyl group, a substituted alkenyl group, an alkynyl group, a substituted alkynyl group, an aralkyl group, and a substituted aralkyl group. Among them, preferred is an alkyl group, a substituted alkyl group, an alkenyl group, a substituted alkenyl group, an aralkyl group, or a substituted aralkyl group, and particularly preferred is an alkyl group, or a substituted alkyl group. Further, the aliphatic group may be a cyclic aliphatic group or a chain aliphatic group. The chain aliphatic group may be branched.

The alkyl group may be a linear, branched or cyclic alkyl group, and the number of carbon atoms of the alkyl group is preferably in the range of 1 to 30, and more preferably 1 to 20. A preferred range of the number of carbon atoms of the alkyl moiety of the substituted alkyl group is the same as in the case of the alkyl group. In addition, the alkyl group may be any one of an alkyl group having a substituent and an unsubstituted alkyl group. Examples of the alkyl group include a methyl group, an ethyl group, a propyl group, a butyl group, a pentyl group, a hexyl group, an octyl group, a 2-ethylhexyl group, a decyl group, a dodecyl group, an octadecyl group, a cyclohexyl group, a cyclopentyl group, a neopentyl group, an isopropyl group, and an isobutyl group.

Examples of the substituent for the substituted alkyl group include a carboxyl group, a sulfo group, a cyano group, a halogen atom (for example, a fluorine atom, a chlorine atom, or a bromine atom), a hydroxy group, an alkoxycarbonyl group having 30 carbon atoms or less (for example, a methoxycarbonyl group, an ethoxycarbonyl group, or a benzyloxycarbonyl group), an alkylsulfonylaminocarbonyl group having 30 carbon atoms or less, arylsulfonylaminocarbonyl group, an alkylsulfonyl group, an arylsulfonyl group, an acylaminosulfonyl group having 30 carbon atoms or less, an alkoxy group having 30 carbon atoms or less (for example, a methoxy group, an ethoxy group, a benzyloxy group, a phenoxyethoxy group, a phenethyloxy group, etc.), an alkylthio group having 30 carbon atoms or less (for example, a methylthio group, an ethylthio group, a methylthioethylthioethyl group, etc.), an aryloxy group having 30 carbon atoms or less (for example, a phenoxy group, a p-tolyloxy group, a 1-naphthoxy group, a 2-naphthoxy group, etc.), a nitro group, an alkyl group having 30 carbon atoms or less, an alkoxycarbonyloxy group, an aryloxycarbonyloxy group, an acyloxy group having 30 carbon atoms or less (for example, an acetyloxy group, a propionyloxy group, etc.), an acyl group having 30 carbon atoms or less (for example, an acetyl group, a propionyl group, a benzoyl group, etc.), a carbamoyl group (for example, a carbamoyl group, an N,N-dimethylcarbamoyl group, a morpholinocarbonyl group, a piperidinocarbonyl group, etc.), a sulfamoyl group (for example, a sulfamoyl group, an N,N-dimethylsulfamoyl group, a morpholinosulfonyl group, a piperidinosulfonyl group, etc.), an aryl group having 30 carbon atoms or less (for example, a phenyl group, a 4-chlorophenyl group, a 4-methylphenyl group, α-naphthyl group, etc.), a substituted amino group (for example, an amino group, an alkylamino group, a dialkylamino group, an arylamino group, a diarylamino group, an acylamino group, etc.), a substituted ureido group, a substituted phosphono group, and a heterocyclic group. Here, a carboxyl group, a sulfo group, a hydroxyl group, and a phosphono group may be in the form of a salt. Examples of the salt-forming cation include M⁺ which will be illustrated hereinafter.

The alkenyl group may be a linear, branched or cyclic alkenyl group, and the number of carbon atoms of the alkenyl group is preferably in the range of 2 to 30, and more preferably 2 to 20. Further, the alkenyl group may be any one of a substituted alkenyl group having a substituent, and an unsubstituted alkenyl group, and a preferred range of the number of carbon atoms of the alkenyl moiety of the substituted alkenyl group is the same as in the case of the alkenyl group. Examples of the substituent for the substituted alkenyl group include the substituents which are the same as those of the substituted alkyl group.

The alkynyl group may be a linear, branched or cyclic alkynyl group, and the number of carbon atoms of the alkynyl group is preferably in the range of 2 to 30, and more preferably 2 to 20. Further, the an alkynyl group may be any one of a substituted alkynyl group having a substituent, and an unsubstituted alkynyl group, and a preferred range of the number of carbon atoms of the alkynyl moiety of the substituted alkynyl group is the same as in the case of the alkynyl group. Examples of the substituent for the substituted alkynyl group include the substituents which are the same as those of the substituted alkyl group.

The aralkyl group may be a linear, branched or cyclic aralkyl group, and the number of carbon atoms of the aralkyl group is preferably in the range of 7 to 35, and more preferably 7 to 25. Further, the aralkyl group may be any one of a substituted aralkyl group having a substituent, and an unsubstituted aralkyl group, and a preferred range of the number of carbon atoms of the aralkyl moiety of the substituted aralkyl group is the same as in the case of the aralkyl group. Examples of the substituent for the substituted aralkyl group include the substituents which are the same as those of the substituted alkyl group.

Examples of the aromatic group represented by R^{5D}, R^{6D}, or R^{7D} include an aryl group, and a substituted aryl group. The number of carbon atoms of the aryl group is preferably in the range of 6 to 30, and more preferably 6 to 20. A preferred range of the number of carbon atoms of the aryl moiety of the substituted aryl group is the same as in the case of the aryl group. Examples of the aryl group include a phenyl group, an α-naphthyl group, and a β-naphthyl group. Examples of the substituent for the substituted aryl group include the substituents which are the same as those of the substituted alkyl group.

The aliphatic oxy group represented by R^{5D}, or R^{6D} is preferably an alkoxy group having 1 to 30 carbon atoms, and examples thereof include, but are not limited to, a methoxy group, an ethoxy group, a butoxy group, an octyloxy group, and a phenoxyethoxy group.

The aromatic oxy group represented by R^{5D}, or R^{6D} is preferably an aryloxy group having 6 to 30 carbon atoms, and examples thereof include, but are not limited to, a phenoxy group, a methylphenyloxy group, a chlorophenyloxy group, a methoxyphenyloxy group, and an octyloxyphenyloxy group.

The heterocyclic group represented by R^{5D}, R^{6D}, or R^{7D} is preferably a heterocyclic group containing an N, O or S atom, and examples thereof include a pyridyl group, a furyl group, a thienyl group, an imidazolyl group, and a pyrrolyl group.

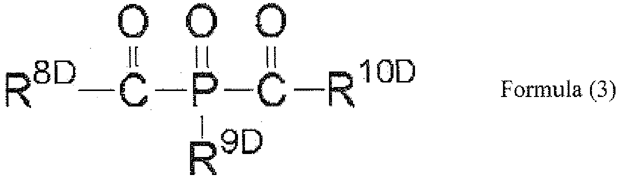

In the formula (3), R^{8D} and R^{10D} each independently represent an alkyl group, an aryl group, or a heterocyclic group, and R^{9D} represents an alkyl group, an aryl group, an alkoxy group, an aryloxy group, or a heterocyclic group. The alkyl group, aryl group, heterocyclic group, alkoxy group and aryloxy group represented by R^{8D}, R^{9D}, or R^{10D} may be substituted or unsubstituted. When substituted, examples of the substituent include substituents which are the same as in the case of formula (2).

The alkyl group, aryl group, heterocyclic group, alkoxy group and aryloxy group in the formula (3) have the same definitions as those in formula (2), respectively.

Among the above compounds, for example, "2,4,6-trimethylbenzoyl-diphenylphosphine oxide" is commercially available under the trade name of Darocur TPO (manufactured by Ciba Specialty Chemicals Inc.), and "bis(2,4,6-trimethylbenzoyl)-phenylphosphine oxide" is commercially available under the trade name of Irgacure 819 (manufactured by Ciba Specialty Chemicals Inc.).

A suitable example of the polymerization initiator may be a water-soluble acyl phosphine oxide-based compound. The acyl phosphine oxide-based compound is preferably dissolved in distilled water at 25°C at a concentration of 0.5% by mass or more, more preferably 1% by mass or more, and particularly preferably 3% by mass or more.

Specific examples of the water-soluble acyl phosphine oxide-based compound include the compounds (for example, Exemplified Compounds 5, 6, and 7) described in JP-A No. 2005-307199. In addition, preferred specific examples of the water-soluble acyl phosphine oxide-based compound (Exemplified Compounds 1-1 to 1-3) will be given below. However, it should be understood that the present invention is not limited thereto.

### -Exemplified Compound 1-1

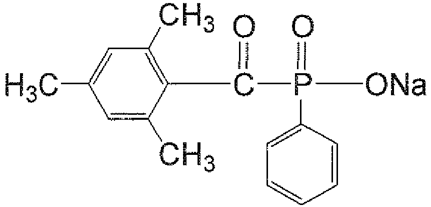

### -Exemplified Compound 1-2

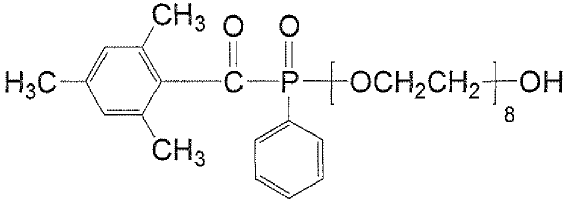

### - Exemplified Compound 1-3

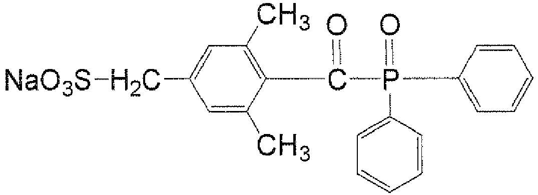

Among the above compounds, the acyl phosphine oxide-based compound is preferably used as a polymerization initiator.

In addition to the above-mentioned polymerization initiators, another polymerization initiator may be used within the scope of not impairing the effect of the present invention. Further, another polymerizable initiator may be used in combination with the acyl phosphine oxide-based compound. In this case, it is preferred to use a water-soluble polymerization initiator. The term "water-soluble" is as defined hereinbefore.

As another polymerization initiator, there may be used mixtures with camphor quinone, benzophenone, benzophenone derivatives, acetophenone, acetophenone derivatives, for example α-hydroxycycloalkylphenyl ketones or 2-hydroxy-2-methyl-1-phenyl-propanone, dialkoxyacetophenones, α-hydroxy- or 4-aroyl-1,3-dioxolanes, benzoin alkyl ethers and benzyl ketals, e.g. benzyl dimethyl ketal, phenyl glyoxalates and derivatives thereof, dimeric phenyl glyoxalates, peresters, e.g. benzophenone tetracarboxylic acid peresters (for example, those described in EP 1126541), halomethyltriazines, e.g. 2-[2-(4-metlaoxy-phenyl)-vinyl]-4,6-bis-trichloromethyl[1,3,5]triazine, 2-(4-methoxy-phenyl)-4,6-bis-trichloromethyl[1,3,5]triazine, 2-(3,4-dimethoxy-phenyl)-4,6-bis-trichloromethyl[1,3,5]triazine, 2-methyl-4,6-bis-trichloromethyl-[1,3,5]triazine, hexaarylbisimidazole/co-initiator systems, e.g. ortho-chlorohexaphenyl-bisimidazole in combination with 2-mercaptobenzothiazole; ferrocenium compounds or titanocenes, for example, dicyclopentadienyl-bis(2,6-difluoro-3-pyrrolo-phenyl)titanium; O-acyloxime ester compounds, as described e.g. in GB 2 339 571. It is also possible to use borate compounds as a co-initiator.

The content of the polymerization initiator in the ink composition is preferably in the range of 0.01 to 35 parts by mass, more preferably 0.1 to 30 parts by mass, and still further preferably 0.5 to 30 parts by mass, with respect to 100 parts by mass of the polymerizable compound. Here, the content of the polymerization initiator means a total amount of the polymerization initiator which was used.

### - Other additives -

The ink composition of the present invention may contain, in addition to the above-described components, as necessary, other additives. Examples of the other additives include known additives such as a UV absorbing agent, an anti-fading agent, an antifungal agent, a pH-adjusting agent, an anti-corrosive agent, an antioxidant, an emulsification stabilizer, a preservative, an anti-foaming agent, a viscosity-adjusting agent, a dispersion stabilizer, a chelating agent, and a surface tension regulator.

The anti-fading agent may be selected from various organic and metal complex-based anti-fading agents. Examples of the organic anti-fading agents include hydroquinones, alkoxy phenols, dialkoxy phenols, phenols, anilines, amines, indans, chromanes, alkoxy anilines, and heterocycles. Examples of the metal complexes include nickel complexes and zinc complexes. Examples of the antioxidant include phenol-based antioxidants (including hindered phenol-based antioxidants), amine-based antioxidants, sulfur-based antioxidants, and phosphor-based antioxidants. Examples of the surface tension regulator include nonionic, cationic, anionic, and betainic surfactants. In order to achieve good ink jetting, the surface tension regulator is preferably used in an amount such that the ink composition has a surface tension of 20 to 60 mN/m, more preferably 20 to 45 mN/m, and even more preferably 25 to 40 mN/m.

Further, specifically, there may be exemplified other additives described in paragraph numbers [0153] to [0162] of JP-A No. 2007-100071. Various additives may be added directly after preparation of the ink composition, or may be added during preparation of the ink composition.

In addition, the ink composition of the present invention may contain a surfactant.

The surfactant is preferably a compound with a structure containing hydrophilic and hydrophobic moieties within the molecule thereof. The surfactant may be anionic, cationic, ampholytic, or nonionic. In addition, a polymer substance (polymer dispersant) is also usable as a surfactant.

Specific examples of the anionic surfactants include sodium dodecylbenzene sulfonate, sodium lauryl sulfate, sodium alkyl diphenyl ether disulfonate, sodium alkyl naphthalene sulfonate, sodium dialkyl sulfosuccinate, sodium stearate, potassium oleate, sodium dioctyl sulfosuccinate, polyoxyethylene alkyl ether sodium sulfate, polyoxyethylene alkyl ether sodium sulfate, polyoxyethylene alkyl phenyl ether sodium sulfate, sodium dialkyl sulfosuccinate, sodium stearate, sodium oleate, and sodium t-octylphenoxy ethoxypolyethoxyethyl sulfate. Specific examples of the nonionic surfactants include poly(oxyethylene)lauryl ether, poly(oxyethylene)octylphenyl ether, poly(oxyethylene)oleylphenyl ether, poly(oxyethylene)nonylphenyl ether, an oxyethylene-oxypropylene block copolymer, t-octylphenoxyethylpolyethoxyethanol, and nonylphenoxyethylpolyethoxyethanol. Examples of the cationic surfactants include tetraalkyl ammonium salts, alkylamine salts, benzalkonium salts, alkylpyridium salts, and imidazolium salts, and specific examples thereof include dihydroxyethylstearylamine, 2-heptadecenyl-hydroxyethylimidazoline, lauryl dimethyl benzyl ammonium chloride, cetyl pyridinium chloride, and stearamidomethyl pyridinium chloride.

These surfactants may be used alone or in combination of two or more thereof. The content of the surfactant in the ink composition is not particularly limited, and is preferably 1% by mass or more, more preferably 1 to 10% by mass, and even more preferably 1 to 3% by mass.

A low-volatile or nonvolatile solvent selected from the above-described water-soluble organic solvents may be preferably added to the ink composition, which can prevent clogging of inkjet nozzles by drying. In addition, a volatile solvent may be added in order to improve penetrability into a recording medium. In addition, a surfactant may be preferably added, so that the ink has an appropriate surface tension.

When the ink is applied by an inkjet method, from the viewpoints of jetting stability and aggregation rate, the viscosity of the ink composition is preferably in the range of 1 to 30 mPa·s, more preferably 1 to 20 mPa·s, and still further preferably 2.5 to 15 mPa·s and particularly preferably 2 to 10 mPa·s. The viscosity of the ink composition may be measured at 20°C using, for example, an E type viscometer.

A pH of the ink composition is preferably in the range of pH 7 to 10 from the viewpoints of ink stability and aggregation rate, and more preferably pH 7 to 9. If the pH value is within the above-specified range, the storage stability is improved, and corrosion of components of an apparatus (inkjet recording apparatus) to which the ink composition is applied is inhibited. The pH of the ink composition is measured by a conventional pH meter (for example, pH meter D-50 manufactured by Horiba, Ltd.) at 25°C.

In addition, the pH of the ink composition may be appropriately adjusted by using an acidic compound or basic compound. As the acidic compound or basic compound, conventionally used compounds may be utilized without particular limitation.

### <Ink set>

The ink set of the present invention includes the above-described ink composition of the present invention, and a treatment liquid containing an aggregating component for aggregating the components in the ink composition. By configuration of the ink set using the above-described ink composition of the present invention, this ink set exhibits water redispersibility, sensitive aggregation progression (improvement of aggregating properties) of dispersed particles (such as colorant or the like) dispersed in the ink composition due to a pH change occurring during contact of the treatment liquid with the ink composition, and significant discrimination of aggregation, and therefore jetting stability and recovery properties are good and an image with less bleeding is obtained.

Details of the ink composition are as described hereinbefore. Now, the treatment liquid will be described in more detail.

The treatment liquid of the present invention is an aqueous composition which is capable of forming an aggregate when the treatment liquid contacts the ink composition. Specifically, the treatment liquid contains at least an aggregating component capable of forming an aggregate through aggregation of dispersed particles (such as colorant particles (pigment, etc)) in the ink composition when the treatment liquid is mixed with the ink composition. The treatment liquid may contain, if necessary, other components. By using the treatment liquid in combination with the ink composition, a high-speed inkjet recording can be achieved, and a high-density, high-resolution image is obtained even upon high-speed recording.

### - Treatment liquid -

The treatment liquid contains at least one aggregating component (hereinafter which may be referred to as "aggregating agent") which is capable of forming an aggregate through contact with the ink composition. By mixing the treatment liquid with the ink composition jetted via an inkjet method, aggregation of pigments or the like stably dispersed in the ink composition is promoted.

Examples of the aggregating agent include a compound capable of altering a pH of the ink composition, a polyvalent metal salt, and a cationic compound. In the present invention, from the viewpoint of aggregating properties of the ink composition, a compound capable of altering a pH of the ink composition is preferable, and a compound capable of lowering a pH of the ink composition is more preferable.

The compound capable of lowering a pH of the ink composition may be an acidic compound.

Examples of the acidic compound include sulfuric acid, hydrochloric acid, nitric acid, phosphoric acid, polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, metaphosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, derivatives of these compounds, and salts thereof.

Among them, preferred is a highly water-soluble acidic compound. From the viewpoint of fixing a total of the ink through reaction with the ink composition, an acidic compound having a valence of 3 or less is preferable, and an acidic compound having a valence of from 2 to 3 is particularly preferable.

The acidic compounds may be used alone or in combination of two or more thereof.

When the treatment liquid of the present invention contains an acidic compound, a pH (25°C) of the treatment liquid is preferably in the range of 0.1 to 6.0, more preferably 0.5 to 5.0, and even more preferably 0.8 to 4.0.

Examples of the polyvalent metal salt include salts of alkaline-earth metals (for example, magnesium, calcium) of Group II of the periodic table of the elements, transition metals (for example, lanthanum) of Group III of the periodic table of the elements, cations (for example, aluminum) of Group XIII of the periodic table of the elements, and lanthanides (for example, neodymium). Preferred examples of salts of these metals include carboxylic acid salts (formate, acetate, benzoate, etc.), nitrate, chloride, and thiocyanate. Among them, preferred are calcium salts or magnesium salts of carboxylic acid (formic acid, acetic acid, benzoic acid, etc.), calcium salts or magnesium salts of nitric acid, calcium chloride, magnesium chloride, and calcium salts or magnesium salts of thiocyanic acid.

The cationic compound may be preferably a cationic surfactant. Preferred examples of the cationic surfactant include compounds of primary, secondary or tertiary amine salt type. Examples of these amine salt type compounds include compounds such as hydrochlorides or acetates (for example, lauryl amine, palmityl amine, stearyl amine., rosin amine, etc.), quaternary ammonium salt type compounds (for example, lauryl trimethylammonium chloride, cetyl trimethylammonium chloride, lauryl dimethylbenzyl ammonium chloride, benzyl tributylammonium chloride, benzalkonium chloride, etc.), pyridinium salt type compounds (for example, cetyl pyridinium chloride, cetyl pyridinium bromide, etc.), imidazoline type cationic compounds (for example, 2-heptadecenyl-hydroxyethylimidazoline, etc.), and ethylene oxide adducts of higher alkylamines (for example, dihydroxyethylstearylamine, etc.). Further, polyallyl amines may also be used. In addition, amphoteric surfactants exhibiting cationic properties in a desired pH region may also be used, and examples thereof include amino acid type amphoteric surfactants, R-NH-CH₂CH₂-COOH type compounds (R represents an alkyl group or the like), carboxylic acid salt type amphoteric surfactants (for example, stearyldimethylbetaine, lauryldihydroxyethylbetaine, etc.), and amphoteric surfactants of sulfuric acid ester type, sulfonic acid type or phosphoric acid ester type.

The aggregating agents may be used alone or in combination of two or more thereof.

The content of the aggregating agent for aggregation of the ink composition in the treatment liquid is preferably in the range of 1 to 50% by mass, more preferably 3 to 45% by mass, and even more preferably 5 to 40% by mass.

When at least one of the acidic compound and the cationic compound is used in combination with the polyvalent metal compound, the content of the acidic compound and the cationic compound in the treatment liquid (total content of the acidic compound and the cationic compound) is preferably in the range of 5% by mass to 95% by mass, and more preferably 20% by mass to 80% by mass, with respect to the total content of the polyvalent metal compound.

The treatment liquid according to the present invention may contain, in general, a water-soluble organic solvent in addition to the aggregating agent, and may also contain various other additives. Details of the water-soluble organic solvent and the various other additives are similar to those for the ink composition as described hereinbefore.

The surface tension (25°C) of the treatment liquid is preferably 20 mN/m or more and 60 mN/m or less. More preferably, the surface tension is 25 mN/m or more and 50 mN/m or less, and is even more preferably 25 mN/m or more and 45 mN/m or less. The surface tension of the treatment liquid is measured under the conditions of a temperature of 25°C using an automatic surface tensiometer CBVP-Z (manufactured by Kyowa Interface Science Co., Ltd.).

In regard to the applying of the treatment liquid on coated paper, known liquid applying methods may be used without any particular limitation, and any method may be selected. Examples of the method include spray coating, coating with a coating roller, applying by an inkjet method, and immersion.

The treatment liquid may be applied over the entire surface of the recording medium (coated paper). The treatment liquid may be partially applied to a region where inkjet recording is performed in the subsequent ink applying step. According to the present invention, in view of uniformly adjusting the amount of applying of the treatment liquid, uniformly recording fine lines, fine image portions or the like, and suppressing density unevenness such as image unevenness, the treatment liquid is preferably applied over the entire surface of the coated paper by coating the liquid using a coating roller or the like. As for the method of coating the treatment liquid while controlling the amount of applying of the aggregating agent to the above-specified range, for example, a method of using an anilox roller may be suitably mentioned. The anilox roller is a roller in which the roller surface, being thermal spray coated with ceramics, is processed with laser and provided with a pattern of a pyramidal shape, a slant-lined shape, a hexagonal shape or the like on the surface. The treatment liquid goes into the depression areas provided on this roller surface, and when the roller surface contacts with the paper surface, transfer occurs, and the treatment liquid is coated in an amount that is controlled at the depressions of the anilox roller.

### <Image-forming method>

The image-forming method according to the present invention includes an ink applying step for applying the above-described ink composition of the present invention onto a recording medium, and a treatment liquid applying step for applying a treatment liquid containing an aggregating component for aggregating the components in the ink composition onto the recording medium.

### - Ink applying step -

The ink applying step involves recording an image by applying the above-described ink composition of the present invention onto a recording medium. Application of the ink composition can be carried by jetting the ink composition by an inkjet method.

Image recording by utilizing the inkjet method can be performed by applying energy thereby jetting an ink composition to a recording medium. Accordingly a colored image is formed. In the inkjet recording method of the present invention, for example, a method described in paragraph numbers [0093] to [0105] of JP-A No. 2003-306623 may be used as a preferable method.

The inkjet method is not particularly limited and may be of any known system, for example, a charge control system of jetting an ink by utilizing an electrostatic attraction force, a drop on demand system of utilizing a vibration pressure of a piezo element (pressure pulse system), an acoustic inkjet system of converting electric signals into acoustic beams, irradiating them to an ink, and jetting the ink by utilizing a radiation pressure, and a thermal inkjet system of heating an ink to form bubbles and utilizing the resultant pressure. As the inkjet method, an inkjet method described in JP-ANo. 54-59936 of causing abrupt volume change to an ink by the effect of thermal energy, and jetting the ink from a nozzle by the force due to the change of state can be utilized effectively.

Examples of the inkjet method include a system of jetting a number of small volume ink droplets of low concentration, a so-called "photo-ink", a system of improving an image quality by using plural kinds of inks of a substantially identical hue and of different concentrations, and a system of using a colorless transparent ink.

According to the ink applying step, an image can be recorded, for example, by changing a conveying speed of the recording medium. There is no particular limitation to the conveying speed of the recording medium, as long as it is not detrimental to the image quality. The conveying speed of the recording medium is preferably in the range of 100 to 3000 mm/s, more preferably 150 to 2700 mm/s, and even more preferably 250 to 2500 mm/s.

There is no particular limitation to the recording medium. For example, a coated paper, which is used in general offset printing or the like, may be used as a recording medium. The coated paper is a product obtained by applying a coating material on the surface of a high class printing paper, a neutral paper or the like, which is mainly made of cellulose and is generally not surface-treated, to provide a coating layer. The image formation by a conventional aqueous inkjet method usually using a coated paper as a recording medium easily causes problems in the product quality, such as image bleeding or rubbing-off, but in the inkjet recording method of the present invention, image bleeding can be suppressed, the generation of density unevenness can be prevented, and images having satisfactory blocking resistance, off-set resistance and rub-off resistance may be recorded.

As the coated paper, those which are commercially available may be used. For example, a coated paper for general printing may be used, and specific examples thereof include coated papers (A2, B2) such as "OK TOPCOAT+" manufactured by Oji Paper Co., Ltd., "AURORA COAT" and "U-LITE" manufactured by Nippon Paper Group Inc., and art paper (A1) such as "TOKUBISHI ART" manufactured by Mitsubishi Paper Mills, Ltd.

### - Treatment liquid applying step -

In the treatment liquid applying step, a treatment liquid which contains an aggregating agent for aggregating the components present in the above-described ink composition is applied on a recording medium (preferably, coated paper). When the image recording using the ink composition is performed in the presence of the treatment liquid, images having satisfactory blocking resistance, off-set resistance and scratch resistance can be recorded, and suppressive effects on the occurrence of curling and cockling of the medium after recording, and of ink repelling can also be obtained.

Any of the ink applying step and the treatment liquid applying step may be carried out first. In view of forming high-quality images, preferred is an embodiment in which the treatment liquid applying step (applying the treatment liquid on a recording medium) is carried out, followed by the ink applying step to form an image.

### - Heat fixation step -

The image-forming method according to the present invention may further include a heat fixation step for heating and fixing the image recorded in the ink applying step. Fixation of the image may be carried out by pressing a pressing member to the ink of the image portion on the recording medium. According to the present invention, an off-set phenomenon is prevented which is detrimental to the image due to transfer of the image (ink composition) to the pressing member when the pressing member is contacted, and image fixation can be rapidly carried out while maintaining the image quality. Thereby, images with excellent image quality, and satisfactory texture (such as image glossiness) and scratch resistance (for example, adhesion to paper) are rapidly recorded.

Fixation of the image portions may be carried out by a pressing step wherein, after the ink applying step, for example, a pressure applicator for applying a pressure to at least an image is pressed to the image portions to press the image portions to be fixed (fixation treatment). Further, a heat pressing step may be carried out wherein fixation (fixation treatment) is carried out by heat-pressing the image portions using a combination of the pressure applicator with a heater for heating the image portions. The pressure applicator may be, for example, a pair of rolls pressing each other, a pressure plate, or the like, and the heater may be, for example, a heat roll, a heat plate, or the like. Specifically, for example, after the ink applying step, the surface of the recording medium may be subjected to pressing treatment by a heat roll or heat plate which has been heated, or the like. In this case, resin particles contained in the ink can be melted. Here, a heat temperature is preferably higher than Tg of resin particles in the ink composition.

Accordingly, the present invention can provide an aqueous pigment dispersion wherein the dispersion state of dispersed particles can be easily controlled by changes in liquid properties (particularly changes in pH), a pigment is finely dispersed, and stability over time and water redispersibility are excellent, and a method for producing the same.

Further, the present invention can provide an ink composition which is excellent in jetting stability and recovery properties, and exhibits less image bleeding, and an ink set which is excellent in response (aggregation) to changes in liquid properties (particularly changes in pH), exhibits less image bleeding, and is excellent in jetting stability and recovery properties, and an image-forming method.

Further, the present invention can provide a dispersant which is excellent from the viewpoint of controlling dispersibility in response to changes in liquid properties (particularly changes in pH) of dispersed particles.

### EXAMPLES

Hereinafter, the present invention will be described in more detail by way of examples, but the present invention is not limited to the following examples. Here, the "part" is on a mass basis, unless otherwise specifically indicated.

### Example 1

### Synthesis Example 1: Synthesis of dispersant polymer P-1

To a 500 ml three-neck flask equipped with a stirrer and a cooling tube was added 88 g of methyl ethyl ketone, followed by heating under a nitrogen atmosphere at 75°C, and a solution of 1.2 g of dimethyl 2,2'-azobis isobutyrate, 75 g of benzyl methacrylate, 15 g of 4-vinyl benzene sulfonic acid and 10 g of 4-vinyl pyridine dissolved in 50 g of methyl ethyl ketone was added dropwise thereto over 3 hours. After reaction for another one hour subsequent to completion of the dropwise addition, a solution of 0.36 g of dimethyl 2,2'-azobis isobutyrate dissolved in 2 g of methyl ethyl ketone was further added thereto, followed by elevation to 78°C and heating for 4 hours. The resulting reaction solution was reprecipitated twice in a large excess of hexane, and the precipitated polymer was dried to afford 97 g of a dispersant polymer P-1 (dispersant).

The composition of the resulting dispersant polymer was confirmed by ¹H-NMR. In addition, a weight average molecular weight (Mw) of polymer P-1 determined by GPC was 38000.

### Synthesis Example 2: Synthesis of dispersant polymer P-13

To a 500 ml three-neck flask equipped with a stirrer and a cooling tube was added 88 g of methyl ethyl ketone, followed by heating under a nitrogen atmosphere at 75°C, and a solution of 1.2 g of dimethyl 2,2'-azobis isobutyrate, 70 g of phenoxy ethyl methacrylate, 20 g ofmethacrylic acid and 10 g of N,N-dimethyl aminoethyl methacrylate dissolved in 50 g of methyl ethyl ketone was added dropwise thereto over 3 hours. After reaction for another one hour subsequent to completion of the dropwise addition, a solution of 0.36 g of dimethyl 2,2'-azobis isobutyrate dissolved in 2 g of methyl ethyl ketone was further added thereto, followed by elevation to 78°C and heating for 4 hours. The resulting reaction solution was reprecipitated twice in a large excess of hexane, and the precipitated polymer was dried to afford 96 g of a dispersant polymer P-13 (dispersant).

The composition of the resulting dispersant polymer was confirmed by ¹H-NMR. In addition, a weight average molecular weight (Mw) of polymer P-13 determined by GPC was 42000.

Other dispersant polymers (dispersant) according to the present invention were synthesized in the same manner as in synthesis of Polymer P-1, by altering the monomers and the proportion thereof as given in Tables 1 and 2 below. Adjustment of the molecular weight was carried out by controlling an addition amount of dimethyl 2,2'-azobis isobutyrate which was a polymerization initiator.

In addition, synthesis of the following comparative polymer A-1 was carried out according to the method described in JP-A No. 9-77995, and synthesis of comparative polymers A-2 and A-3 was carried out in the same manner as in Synthesis Example 1.

### Example 2: Preparation of pigment dispersions D- I to D-35

10 parts by mass of Pigment Blue 15:3 (PB15:3, Phthalocyanine Blue A220, manufactured by Dainichiseika Color & Chemicals Mfg. Co., Ltd.), 5 parts by mass of the dispersant polymer P-1, 42 parts by mass of methyl ethyl ketone, 5.5 parts by mass of a 1N NaOH aqueous solution, and 87.2 parts by mass of ion exchange water were mixed together, and dispersed for 2 to 6 hours in a bead mill together with zirconia beads having a diameter of 0.1 mm. The methyl ethyl ketone was removed from the obtained dispersion at 55°C under reduced pressure, and part of water was removed to obtain a dispersion of pigment-containing resin particles having a pigment concentration of 10.2% by mass. The dispersion was further centrifuged at 5000 rpm for 30 minutes using a centrifugal machine (05P-21, manufactured by Hitachi, Ltd.), and then ion exchange water was added thereto to make a pigment dispersion having a pigment concentration of 15% by mass. The dispersion was filtered under pressure through a 2.5 µm membrane filter (manufactured by Advantec Co., Ltd.), and then ion exchange water was added to obtain a dispersion of pigment-containing resin particles (pigment dispersion D-1) having a pigment concentration of 4% by mass.

The dispersions of pigment-containing resin particles (pigment dispersions D-2 to D-35) were prepared in the same manner as in the preparation of the pigment dispersion D-1, except that the dispersant polymer P-1 and Pigment Blue 15:3 were respectively replaced with the ingredients listed in Table 1 below.

Details about the pigments listed in Table 1 are as follows.
- PR122: C. I. Pigment Red 122 (trade name: CROMOPHTAL Jet Magenta DMQ, manufactured by Ciba Specialty Chemicals Inc.)
- PY74: C. I. Pigment Yellow 74 (trade name: Irgalite Yellow GS, manufactured by Ciba Specialty Chemicals Inc.)
- CB: Carbon Black (trade name: NIPEX180-IQ, manufactured by Degussa)

### Example 3: Preparation of aqueous inks J-1 to J-35

Using the pigment dispersion D-1 prepared above, a composition containing the pigment dispersion was prepared according to the following composition formula. The composition was centrifuged at 10000 to 20000 rpm for 30 minutes to 2 hours to obtain an aqueous ink J-1 for inkjet recording.

### <Composition of aqueous ink J-1>

- Pigment dispersion D-1: 40 parts
- Glycerin: 7 parts
- Diethylene glycol: 9 parts
- Triethanolamine: 1 part
- OLFIN E1010: 1 part (manufactured by Nisshin Chemical Industry Co., Ltd.)
- Triethylene glycol monobutyl ether: 9 parts
- Ion exchange water: 34 parts

The aqueous ink J-1 had a pH of 8.6 as measured with a pH meter WM-50EG (manufactured by DKK-Toa Corporation).

Aqueous inks J-2 to J-35 (corresponding to pigment dispersions D-2 to D-35) were prepared in the same manner as in the preparation of the aqueous ink J-1, except that the pigment dispersion D-1 was replaced with the pigment dispersions D-2 to D-35, respectively.

### Comparative Example 1: Preparation of comparative pigment dispersions D-36 to D-47

Pigment dispersions D-36 to D-47 were prepared in the same manner as in the preparation of the pigment dispersion D-1 in Example 2, except that the dispersant polymer P-1 was replaced with any one of dispersant polymers A-1 to A-3 and the pigment was changed to one listed in Table 1 below.

### Comparative Example 2: Preparation of comparative aqueous inks J-36 to .1-47

Aqueous inks J-36 to J-47 (corresponding to pigment dispersions D-36 to D-47) were prepared in the same manner as in the aqueous ink J-1 of Example 3, except that the pigment dispersion D-1 was replaced with the pigment dispersions D-36 to D-47, respectively.

### (Evaluation 1)

The following measurement and evaluation were carried out for the pigment dispersions (aqueous colorant dispersions) prepared as above. The results are given in Table 1 below.

### 1. Measurement of average particle diameter

The volume average particle diameter of the pigment dispersion was measured with a NANOTRAC particle size distribution analyzer UPA-EX150 (manufactured by Nikkiso Co., Ltd.) by a dynamic light scattering method.

Measurement Conditions: 10 cc of ion exchange water was added to 10 µl of a dispersion to make a sample solution, and the particle diameter was measured at 25°C. Evaluation was made according to the following evaluation criteria.

### <Evaluation criteria>

A: 70 nm ≤ average particle diameter < 100 nm.
B: 100 nm ≤ average particle diameter < 130 nm.
C: 130 nm ≤ average particle diameter < 200 nm.
D: 200 nm ≤ average particle diameter

### 2. Stability over time of pigment dispersion

Stability over time was evaluated under the following two types of test conditions.

Before and after the pigment dispersion was allowed to stand at 50°C for 2 days in a hermetically sealed state, the average particle diameter and viscosity thereof were measured. Aggregation and thickening of the pigment particles were evaluated according to the following evaluation criteria.

### <Evaluation criteria>

A: Completely no change in the average particle diameter or viscosity of pigment particles was observed.
B: Substantially no change in the average particle diameter or viscosity of pigment particles was observed.
C: Slight change in the average particle diameter or viscosity of pigment particles was observed, presenting no practical problem.
D: Change in the average particle diameter or viscosity of pigment particles was observed, presenting practical problem.

### The average particle diameter was measured in the same manner as in "1. Measurement of average particle diameter". In addition, the viscosity was measured according to the following procedure.

### <Measurement of viscosity>

The viscosity of the pigment dispersion was measured at 25°C using a TV-22 viscometer (manufactured by Toki Sangyo Co., Ltd.).

### (Evaluation 2)

The aqueous inks obtained as above were subjected to the following measurement and evaluation, using, as an inkjet recording apparatus, an inkjet printer having a prototype print head having 600 dpi and 256 nozzles. The results are given in Table 1 below.

### 3. Jetting stability

During recording using the inkjet recording apparatus, the recorded materials were observed from the initiation to completion of the recording to determine the frequency of the occurrence of ink flight deviation and mist. The evaluation was made according to the following evaluation criteria.

### - Evaluation criteria -

A: Substantially no occurrence of ink flight deviation or mist was observed.
B: Occurrence of ink flight deviation and mist was observed with low frequency to the extent of no practical problem.
C: Occurrence of ink flight deviation and mist was observed with low frequency, but the frequency is higher as compared to the level "B", potentially presenting practical problem where a high-quality image is required.
D: Frequent occurrence of ink flight deviation and mist was observed, presenting practical problem.

### 4. Jetting recovery properties

After recording using the inkjet recording apparatus, the apparatus was allowed to stand in air at 25°C and 65% RH for 2 days with the head portion uncovered. Thereafter, ink jetting was carried out again, and the jetting condition was observed and rated according to the following evaluation criteria.

### <Evaluation criteria>

A: Rejetting was capable of being carried out without maintenance.
B: Rejetting was capable of being carried out after predetermined maintenance.
C: Rejetting was capable of being carried out after two times of predetermined maintenance.
D: Rejetting was not capable of being carried out with three times of predetermined maintenance.

As used herein, the terms "predetermined maintenance" refers to an operation of removing the clogging of heads by jetting an ink with a pressure of 15 Pa.

### 5. Image quality

OK TOPCOAT+ (recording medium, manufactured by Oji Paper Co., Ltd.) was fixed on a stage moving at 500 mm/sec, a treatment liquid mentioned below was coated thereon using a wire bar coater at a thickness of about 1.2 µm, and this was immediately dried at 50°C for 2 seconds. Thereafter, a cyan ink solid image was printed with a printer head (trade name: GELJET GX5000, manufactured by Ricoh Co., Ltd.), which had been arranged and fixed aslant (75.5 degrees) relative to a scanning direction, in a line system at a resolution degree of 1200 x 1200 dpi and a droplet jetting amount of 2.4 pL. Immediately after printing, the sample was dried at 60°C for 3 seconds, passed between one pair of fixing rollers heated at 60°C, and subjected to heat fixation at a nip pressure of 0.25 MPa and a nip width of 4 mm to thereby prepare a printed sample. The resulting printed sample was examined with the naked eye or a loupe, and evaluated according to the following evaluation criteria.

### <Evaluation criteria>

A: White deletion was not observed with a loupe.
B: White deletion was not observed with the naked eye, but was observed with a loupe.
C: White deletion was observed with the naked eye (without a loupe).
D: White deletion was easily observed by the naked eye (without a loupe).

### 6. Rub-off resistance

An OK TOPCOAT+ (recording medium, manufactured by Oji Paper Co., Ltd.) was fixed on a stage moving at 500 mm/sec, a treatment liquid mentioned below was coated thereon using a wire bar coater at a thickness of about 1.2 µm, and this was immediately dried at 50°C for 2 seconds. Thereafter, a cyan ink solid image was printed with a printer head (trade name: GELJET GX5000, manufactured by Ricoh Co., Ltd.), which had been arranged and fixed aslant (75.5 degrees) relative to a scanning direction, in a line system at a resolution degree of 1200 x 1200 dpi and a droplet jetting amount of 2.4 pL. Immediately after printing, the sample was dried at 60°C for 3 seconds, passed between one pair of fixing rollers heated at 60°C, and subjected to heat fixation at a nip pressure of 0.25 MPa and a nip width of 4 mm to thereby prepare a printed sample. A paperweight (weight 470 g, size 15 mm x 30 mm x 120 mm, corresponding to a load of 260 kg/m²) wrapped with unprinted OK TOPCOAT+ (manufactured by Oji Paper Co., Ltd.) was rubbed three reciprocations against the image-formed surface of the printed sample. A printed surface after rubbing was observed visually for peeling of image, and evaluated according to the following evaluation criteria.

In addition, when peeling of image was not confirmed by three reciprocations, rubbing was further carried out up to 6 reciprocations.

### <Evaluation Criteria>

A: Peeling of image was not visually observed even after 6 reciprocating rubbings.
B: Peeling of image was not visually observed after 4 reciprocating rubbings but was visually observed after 6 reciprocating rubbings.
C: Peeling of image was not visually observed after 2 reciprocating rubbings but was visually observed after 4 reciprocating rubbings.
D: Peeling of image was visually observed after 2 reciprocating rubbings.

### Preparation of treatment liquid -

Individual components were mixed according to the following composition formula, thereby preparing a treatment liquid. The treatment liquid had the following physical property values: a viscosity of 2.6 mPa·s, a surface tension of 37.3 mN/m, and a pH of 1.6 (25°C).

### <Composition of treatment liquid>

- Malonic acid: 15.0%
   (divalent carboxylic acid, manufactured by Wako Pure Chemical Industries, Ltd.)
- Diethylene glycol monomethyl ether: 20.0%
   (manufactured by Wako Pure Chemical Industries, Ltd.)
- Sodium N-oleoyl-N-methyltaurate (surfactant): 1.0%
- Ion exchange water: 64.0%

**Table 1**

| Aqueous ink | Pigment dispersion | Dispersant polymer | | | | | | Pigment | Evaluation of pigment dispersion | | Evalualion of aqueous ink | | Evaluation of image | | Remarks | |
|---|---|---|---|---|---|---|---|---|---|---|---|---|---|---|---|---|
| | | Species (*1) | Unit ratio | | | | Molecular weight (x10³) | | Particle diameter | Stability over time | Jetting stability | Jetting recovery properties | Image quality | Rub-off resistance | | |
| | | | a | b | c | d | | | | | | | | | | |
| J-1 | D-1 | P-1 | 75 | 15 | 10 | | 3.8 | PB15:3 | C | C | A | A | C | A | Comp. | Heat-melt fixation system |
| J-2 | U-2 | P-2 | 65 | 15 | 2U | | 2.9 | PB15:3 | C | C | A | A | C | A | Comp. | |
| J-3 | D-3 | P-3 | 75 | 20 | 5 | | 12.3 | PB15:3 | C | C | A | A | B | A | Comp. | |
| J-4 | D-4 | P-⁻4 | 75 | 15 | 10 | | 3.5 | PB15:3 | C | C | A | A | B | A | Comp. | |
| J-5 | D-5 | P-5 | 65 | 30 | 5 | | 9.6 | PB15:3 | B | B | A | A | B | A | Inventive | |
| J-6 | D-6 | P-6 | 75 | 10 | 15 | | 9.5 | PB15:3 | B | B | A | A | B | A | Inventive | |
| J-7 | D-7 | P-7 | 80 | 15 | 5 | | 7.4 | PB15:3 | A | A | A | A | B | A | Inventive | |
| J-8 | D-8 | P-8 | 80 | 15 | 5 | | 5.2 | PB15:3 | A | A | A | A | B | A | Inventive | |
| J-9 | D-9 | P-9 | 80 | 15 | 5 | | 5.8 | PB15:3 | A | A | A | A | A | A | Inventive | |
| J-10 | D-10 | P-13 | 70 | 20 | 10 | | 4.2 | PB15:3 | A | A | A | A | A | A | Inventive | |
| J-11 | D-11 | P-14 | 50 | 10 | 10 | 30 | 6.1 | PB15:3 | C | C | A | A | B | A | Comp. | |
| J-12 | D-12 | P-2 | 65 | 15 | 20 | | 2.9 | PR122 | C | C | A | A | C | A | Comp. | |
| J-13 | D-13 | P-3 | 75 | 20 | 5 | | 12.3 | PR122 | C | C | A | A | B | A | Comp. | |
| J-14 | D-14 | P-4 | 75 | 15 | 10 | | 3.5 | PR122 | C | C | A | A | B | A | Comp. | |
| J-15 | D-15 | P-5 | 65 | 30 | 5 | | 9.6 | PR122 | B | B | A | A | B | A | Inventive | |
| J-16 | D-16 | P-6 | 75 | 10 | 15 | | 9.5 | PR122 | B | B | A | A | B | A | Inventive | |
| J-17 | D-17 | P-7 | 80 | 15 | 5 | | 7.4 | PR122 | A | A | A | A | B | A | Inventive | |
| J-18 | D-18 | P-8 | 80 | 15 | 5 | | 5.2 | PR122 | A | A | A | A | B | A | Inventive | |
| J-19 | D-19 | P-⁻9 | 80 | 15 | 5 | | 5.8 | PR122 | A | A | A | A | A | A | Inventive | |
| J-20 | D-20 | P-2 | 65 | 15 | 20 | | 2.9 | PY74 | C | C | A | A | C | A | Comp. | |
| J-21 | D-21 | P-3 | 75 | 20 | 5 | | 12.3 | PY74 | C | C | A | A | B | A | Comp. | |
| J-22 | D-22 | P-4 | 75 | 15 | 10 | | 3.5 | PY74 | C | C | A | A | B | A | Comp. | |
| J-23 | D-23 | P-5 | 65 | 30 | 5 | | 9.6 | PY74 | B | B | A | A | B | A | Inventive | |
| J-24 | D-24 | P-6 | 75 | 10 | 15 | | 9.5 | PY74 | B | 13 | A | A | B | A | Inventive | |
| J-25 | D-25 | P-7 | 80 | 15 | 5 | | 7.4 | PY74 | A | A | A | A | B | A | Inventive | |
| J-26 | D-26 | P-8 | 80 | 15 | 5 | | 5.2 | PY74 | A | A | A | A | B | A | Inventive | |
| J-27 | D-27 | P-9 | 80 | 15 | 5 | | 5.8 | PY74 | A | A | A | A | A | A | Inventive | |
| J-28 | D-28 | P-2 | 65 | 15 | 20 | | 2.9 | CB | C | C | A | A | C | A | Comp. | |
| J-29 | D-29 | P-3 | 75 | 20 | 5 | | 12.3 | CB | C | C | A | A | B | A | Comp. | |
| J-30 | D-30 | P-4 | 75 | 15 | 10 | | 3.5 | CB | C | C | A | A | B | A | Comp. | |
| J-31 | D-31 | P-5 | 65 | 30 | 5 | | 9.6 | CB | B | B | A | A | B | A | Inventive | |
| J-32 | D-32 | P-6 | 75 | 10 | 15 | | 9.5 | CB | B | B | A | A | B | A | Inventive | |
| J-33 | D-33 | P-7 | 80 | 15 | 5 | | 7.4 | CB | A | A | A | A | B | A | Inventive | |
| J-34 | D-34 | P-8 | 80 | 15 | 5 | | 5.2 | CB | A | A | A | A | B | A | Inventive | |
| J-35 | D-35 | P-9 | 80 | 15 | 5 | | 5.8 | CB | A | A | A | A | A | A | Inventive | |
| J-36 | D-36 | A-1 | - | | | | 2.7 | PB15:3 | D | C | D | D | C | C | Comparative | |
| J-37 | D-37 | A-2 | - | | | | 3.5 | PB15:3 | C | C | C | C | D | D | Comparalive | |
| J-38 | D-38 | A-3 | - | | | | 3.8 | PB15:3 | D | D | C | C | C | C | Comparative | |
| J-39 | D-39 | A-1 | - | | | | 2.7 | PR122 | D | C | D | D | C | C | Comparative | |
| J-40 | D-40 | A-2 | - | | | | 3.5 | PR122 | C | C | C | C | D | D | Comparative | |
| J-42 | D-41 | A-3 | - | | | | 3.8 | PR122 | D | D | C | C | C | C | Comparative | |
| J-42 | D-42 | A-1 | - | | | | 2.7 | PY74 | D | C | D | D | C | C | Comparative | |
| J-43 | D-43 | A-2 | - | | | | 3.5 | PY74 | C | C | C | C | D | D | Comparative | |
| J-44 | D-44 | A-3 | - | | | | 3.8 | PY74 | D | D | C | C | C | C | Comparative | |
| J-45 | D-45 | A-1 | - | | | | 2.7 | CB | D | C | D | D | C | C | Comparative | |
| J-46 | D-46 | A-2 | - | | | | 3.5 | CB | C | C | C | C | D | D | Comparative | |
| J-47 | D-47 | A-3 | - | | | | 3.8 | CB | D | D | C | C | C | C | Comparative | |

| | | | | | | | | | | | | | | | | |
|---|---|---|---|---|---|---|---|---|---|---|---|---|---|---|---|---|
| *1:P-1 and the like represent the above-described Exemplified Compound of polymer (B). | | | | | | | | | | | | | | | | |

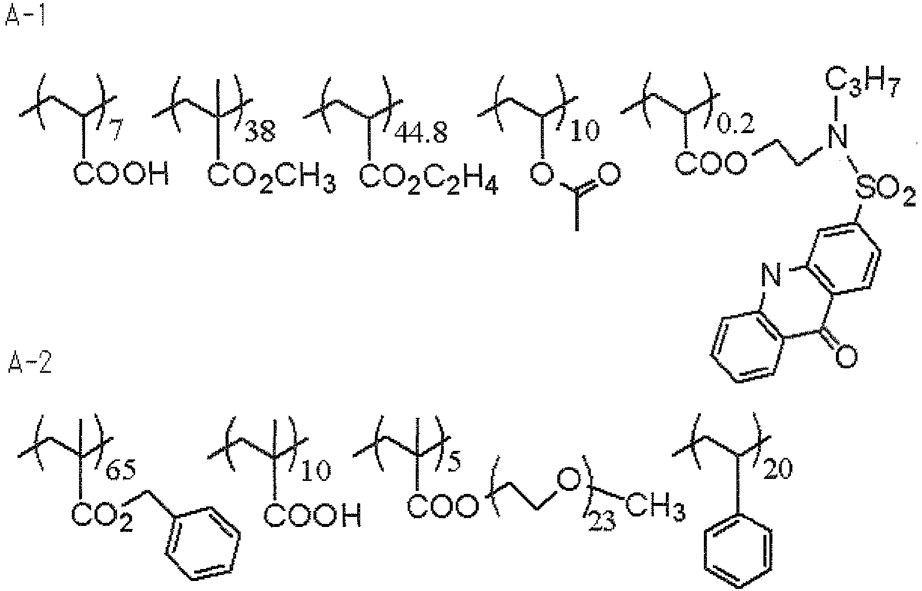

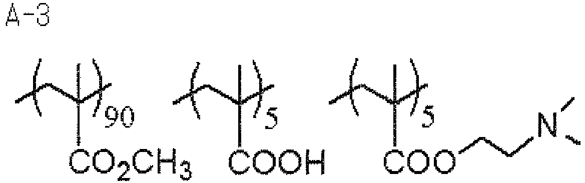

### Example 4: Preparation of aqueous UV-curable inks J-48 to J-70

Using the pigment dispersion D-1 prepared above, a composition containing the pigment dispersion was prepared according to the following composition formula. The composition was centrifuged at 10000 to 20000 rpm for 30 minutes to 2 hours to obtain an inkjet recording aqueous ink (aqueous UV-curable ink J-48).

### <Composition of aqueous ink>

- Pigment dispersion D-1: 40 parts
- Exemplified Compound 1-1 (polymerization initiator); 3 parts
- Exemplified Compound 2-1 (polymerizable compound): 20 parts
- Glycerin: 7 parts
- Diethylene glycol: 9 parts
- Triethanolamine: 1 part
- OLFIN E1010: 1 part
   (manufactured by Nisshin Chemical Industry Co., Ltd.)
- Triethylene glycol monobutyl ether: 9 parts
- Ion exchange water: 10 parts

All of the aqueous inks had a pH of 8.6 as measured with a pH meter WM-50EG (manufactured by DKK-Toa Corporation).

Aqueous inks J-49 to J-70 (each corresponding to any of pigment dispersions D-2 to D-14 listed in Table 2 below) were prepared in the same manner as in the preparation of the aqueous ink J-48, except that the pigment dispersion D-1 was replaced with the pigment dispersions listed in Table 2 below, respectively.

The same evaluations as the Evaluations 1 and 2 were carried out for the aqueous UV-curable inks J-48 to J-70 prepared as above. The evaluation results are given in Table 2 below. In addition, with respect to evaluation of image quality and rub-off resistance in Evaluation 2, image fixation was carried out according to the following method, thereby obtaining a printed sample.

### * Aqueous UV image fixation method*

OK TOPCOAT+ (recording medium, manufactured by Oji Paper Co., Ltd.) was fixed on a stage moving at 500 mm/sec, a treatment liquid was coated thereon using a wire bar coater at a thickness of about 1.2 µm, and this was immediately dried at 50°C for 2 seconds. Thereafter, a cyan ink solid image was printed with a printer head (trade name: GELJET GX5000, manufactured by Ricoh Co., Ltd.), which had been arranged and fixed aslant (75.5 degrees) relative to a scanning direction, in a line system at a resolution degree of 1200 x 1200 dpi and a droplet jetting amount of 2.4 pL. Immediately after printing, the sample was dried at 60°C for 3 seconds, and was subjected to fixation treatment by exposure thereof using a UV lamp at an irradiation dose of 2.5 J/cm², thereby preparing a printed sample.

### Comparative Example 3: Preparation of comparative aqueous UV-curable inks J-71 to J-73

Aqueous UV-curable inks 3-71 to J-73 (corresponding to pigment dispersions D-36 to D-38) were prepared in the same manner as in the aqueous ink J-48 of Example 4, except that the pigment dispersion D-1 was replaced with the pigment dispersions D-36 to D-38, respectively.

The same evaluations as the Evaluations 1 and 2 were carried out for the aqueous UV-curable inks J-71 to J-73 prepared as above. The evaluation results are given in Table 2 below. In addition, with respect to evaluation of image quality and rub-off resistance in Evaluation 2, image fixation was carried out according to the above-described aqueous UV image fixation method, thereby obtaining a printed sample.

**Table 2**

| Aqueous ink | Pigment dispersion | Dispersant polymer | | | | | | Pigment | Evaluation of pigment dispersion | | Evaluation of aqueous ink | | Evaluation or image | | Remarks | |
|---|---|---|---|---|---|---|---|---|---|---|---|---|---|---|---|---|
| | | Species (*1) | Unit ratio | | | | Molecular weight (x10³) (x10³) | | Particle diameter | Stability over time | jetting stability | jetting recovery properties | Image quality | Rub-off resistance | | |
| | | | a | b | c | d | | | | | | | | | | |
| J-48 | D-1 | P-1 | 75 | 15 | 10 | | 3.8 | PB15:3 | C | C | A | A | C | A | Comp. | Aqueous UV-curable system |
| J-49 | D-2 | P-2 | 65 | 15 | 20 | | 2.9 | PB15:3 | C | C | A | A | C | A | Comp. | |
| J-50 | D-3 | P-3 | 75 | 20 | 5 | | 12.3 | PB15:3 | C | C | A | A | B | A | Comp. | |
| J-51 | D-4 | P-4 | 75 | 15 | 10 | | 3.5 | PB15:3 | C | C | A | A | B | A | Comp. | |
| J-52 | D-5 | P-5 | 65 | 30 | 5 | | 9.6 | PB15:3 | B | B | A | A | B | A | Inventive | |
| J-53 | D-6 | P-6 | 75 | 10 | 15 | | 9.5 | PB15:3 | B | B | A | A | B | A | Inventive | |
| J-54 | D-7 | P-7 | 80 | 15 | 5 | | 7.4 | PB15:3 | A | A | A | A | B | A | Inventive | |
| J-55 | D-8 | P-8 | 80 | 15 | 5 | | 5.2 | PB15:3 | A | A | A | A | B | A | Inventive | |
| J-56 | D-9 | P-9 | 80 | 15 | 5 | | 5.8 | PB15:3 | A | A | A | A | A | A | Inventive | |
| J-57 | D-13 | P-13 | 70 | 20 | 10 | | 4.2 | PB15:3 | A | A | A | A | A | A | Inventive | |
| J-58 | D-14 | P-14 | 50 | 10 | 10 | 30 | 6.1 | PB15:3 | C | C | A | A | B | A | Comp. | |
| J-59 | D-5 | P-5 | 65 | 30 | 5 | | 9.6 | PR122 | B | B | A | A | B | A | Inventive | |
| J-60 | D-7 | P-7 | 80 | 15 | 5 | | 7.4 | PR122 | A | A | A | A | B | A | Inventive | |
| J-61 | D-9 | P-9 | 80 | 15 | 5 | | 5.8 | PR122 | A | A | A | A | A | A | Inventive | |
| J-62 | D-5 | P-5 | 65 | 3U | 5 | | 9.6 | PY74 | B | B | A | A | B | A | Inventive | |
| J-63 | D-7 | P-7 | 80 | 15 | 5 | | 7.4 | PY74 | A | A | A | A | B | A | Inventive | |
| J-64 | D-9 | P-9 | 80 | 15 | 5 | | 5.8 | PY74 | A | A | A | A | A | A | Inventive | |
| J-65 | D-5 | P-5 | 65 | 30 | 5 | | 9.6 | PR122 | B | B | A | A | B | A | Inventive | |
| J-66 | D-7 | P-7 | 80 | 15 | 5 | | 7.4 | PR122 | A | A | A | A | B | A | Inventive | |
| J-67 | D-9 | P-9 | 80 | 15 | 5 | | 5.8 | PR122 | A | A | A | A | A | A | Inventive | |
| J-68 | D-5 | P-5 | 65 | 30 | 5 | | 9.6 | CB | B | B | A | A | B | A | Inventive | |
| J-69 | D-7 | P-7 | 80 | 15 | 5 | | 7.4 | CB | A | A | A | A | B | A | Inventive | |
| J-70 | D-9 | P-9 | 80 | 15 | 5 | | 5.8 | CB | A | A | A | A | A | A | Inventive | |
| J-71 | D-36 | A-1 | | | | | 2.7 | PB15:3 | D | c | D | D | C | C | Comparative | |
| J-72 | D-37 | A-2 | | | | | 3.5 | PB15:3 | C | C | C | C | D | D | Comparative | |
| J-73 | D-38 | A-3 | | | | | 3.8 | PB15:3 | D | D | C | C | C | C | Comparative | |

| | | | | | | | | | | | | | | | | |
|---|---|---|---|---|---|---|---|---|---|---|---|---|---|---|---|---|
| *1. P-1 and the like represent the above-described Exemplified Compound of polymer (B). | | | | | | | | | | | | | | | | |

As shown in Tables 1 and 2, the pigment dispersions of the present invention had a finely dispersed colorant, and exhibited excellent stability over time and water redispersibility, as compared to comparative dispersions. In addition, the images formed using the aqueous inks and aqueous UV-curable inks of the present invention exhibited good image quality and excellent rub-off resistance, as compared to comparative ones.

## Claims

1. A pigment dispersant which is a random copolymer comprising:
a hydrophobic structural unit (a) represented by the following formula (b): 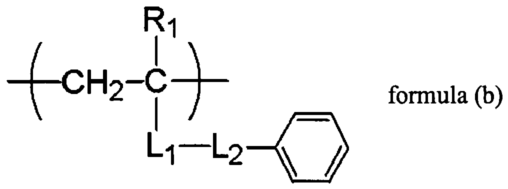
wherein R₁ represents a hydrogen atom or a methyl group; L₁ represents *-COO- with the symbol * indicating the connecting point with the main chain; and L₂ represents a divalent linking group containing an oxyalkylene group and having 1 to 12 carbon atoms;
a hydrophilic structural unit (b) having an ionic group; and
a structural unit (c) derived from an aliphatic amine or monocyclic aromatic amine.

2. A pigment dispersant according to Claim 1, wherein the hydrophobic structural unit (a) is derived from 2-phenoxyethyl acrylate or 2-phenoxyethyl methacrylate.

3. A pigment dispersant according to Claim 1, wherein the ionic group in the hydrophilic structural unit (b) is an anionic group.

4. A pigment dispersant according to Claim 3, wherein the anionic group is a carboxyl group, a phosphoric acid group or a sulfonic acid group.

5. A pigment dispersant according to any preceding Claim, wherein the structural unit (c) includes a structural unit derived from an aliphatic tertiary amine.

6. An aqueous pigment dispersion comprising a pigment (A) and a pigment dispersant (B) as defined in any preceding Claim.

7. A method for producing an aqueous pigment dispersion as defined in Claim 6, comprising:
adding an aqueous solution containing a basic substance to a mixture containing the pigment (A), the pigment dispersant (B) and an organic solvent (C) for dissolving or dispersing the pigment dispersant (B); and
removing the organic solvent (C) to obtain the dispersion.

8. An ink composition comprising the aqueous pigment dispersion as defined in Claim 6.

9. An ink set comprising:
the ink composition of Claim 8; and
a treatment liquid containing an aggregating component for aggregating components in the ink composition.

10. An image-forming method comprising:
applying the ink composition of Claim 8 onto a recording medium; and
applying a treatment liquid containing an aggregating component for aggregating components in the ink composition onto the recording medium.

## Patentansprüche

1. Pigment-Dispergiermittel, welches ein statistisches Copolymer ist, umfassend:
eine hydrophobe Struktureinheit (a), dargestellt durch die folgende Formel (b): 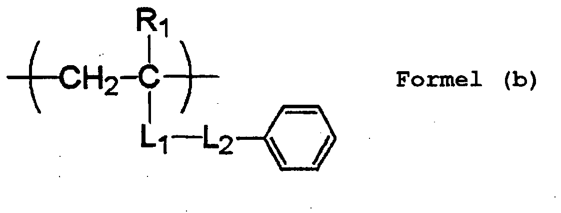
worin R₁ ein Wasserstoffatom oder eine Methylgruppe darstellt; L₁ *-COO- darstellt, wobei das Symbol * den Verbindungspunkt mit der Hauptkette anzeigt; und L₂ eine divalente Verknüpfungsgruppe darstellt, die eine Oxyalkylengruppe enthält und 1 bis 12 Kohlenstoffatome aufweist;
eine hydrophile Struktureinheit (b), die eine ionische Gruppe aufweist; und
eine Struktureinheit (c), die aus einem aliphatischen Amin oder einem monocyclischen aromatischen Amin abgeleitet ist.

2. Pigment-Dispergiermittel gemäß Anspruch 1, worin die hydrophobe Struktureinheit (a) aus 2-Phenoxyethylacrylat oder 2-Phenoxyethylmethacrylat abgeleitet ist.

3. Pigment-Dispergiermittel gemäß Anspruch 1, worin die ionische Gruppe in der hydrophilen Struktureinheit (b) eine anionische Gruppe ist.

4. Pigment-Dispergiermittel gemäß Anspruch 3, worin die anionische Gruppe eine Carboxylgruppe, eine Phosphorsäuregruppe oder eine Sulfonsäuregruppe ist.

5. Pigment-Dispergiermittel gemäß irgendeinem vorhergehenden Anspruch, worin die Struktureinheit (c) eine aus einem aliphatischen tertiären Amin abgeleitete Struktureinheit umfasst.

6. Wässrige Pigmentdispersion, umfassend ein Pigment (A) und ein Pigment-Dispergiermittel (B), wie in irgendeinem vorhergehenden Anspruch definiert.

7. Verfahren zur Herstellung einer wässrigen Pigmentdispersion gemäß Anspruch 6, umfassend:
Zugeben einer wässrigen.Lösung, die eine basische Substanz enthält, zu einer Mischung, die das Pigment (A), das Pigment-Dispergiermittel (B) und ein organisches Lösungsmittel (C) zum Lösen oder Dispergieren des Pigment-Dispergiermittels (B) enthält; und
Entfernen des organischen Lösungsmittels (C), um die Dispersion zu erhalten.

8. Tintenzusammensetzung, umfassend die wässrige Pigmentdispersion gemäß Anspruch 6.

9. Tintenset, umfassend:
die Tintenzusammensetzung gemäß Anspruch 8; und
eine Behandlungsflüssigkeit, die eine aggregierende Komponente zum Aggregieren der Komponenten in der Tintenzusammensetzung enthält.

10. Bilderzeugungsverfahren, umfassend:
Auftragen der Tintenzusammensetzung gemäß Anspruch 8 auf ein Aufzeichnungsmedium; und
Auftragen einer Behandlungsflüssigkeit, die eine aggregierende Komponente zum Aggregieren der Komponenten in der Tintenzusammensetzung enthält, auf das Aufzeichnungsmedium.

## Revendications

1. Dispersant de pigment qui est un copolymère statistique comprenant :
une unité de structure hydrophobe (a) représentée par la formule (b) suivante : 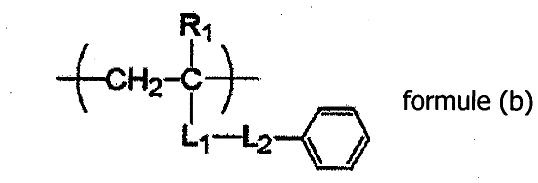
où R₁ représente un atome d'hydrogène ou un groupe méthyle ; L₁ représente *-COO- avec le symbole * indiquant le point de connexion avec la chaîne principale ; et L₂ représente un groupe de liaison divalent comprenant un groupe oxyalkylène et ayant de 1 à 12 atomes de carbone ;
une unité de structure hydrophile (b) présentant un groupe ionique ; et
une unité de structure (c) dérivée d'une amine aliphatique ou d'une amine aromatique monocyclique.

2. Dispersant de pigment selon la revendication 1, dans lequel l'unité de structure hydrophobe (a) est dérivée d'acrylate de 2-phénoxy-éthyle ou de méthacrylate de 2-phénoxyéthyle.

3. Dispersant de pigment selon la revendication 1, dans lequel le groupe ionique dans l'unité de structure hydrophobe (b) est un groupe anionique.

4. Dispersant de pigment selon la revendication 3, dans lequel le groupe anionique est un groupe carboxyle, un groupe acide phosphorique ou un groupe acide sulfonique.

5. Dispersant de pigment selon l'une quelconque des revendications précédentes, dans lequel l'unité de structure (c) comprend une unité de structure dérivée d'une amine tertiaire aliphatique.

6. Dispersion aqueuse de pigment comprenant un pigment (A) et un dispersant de pigment (B) selon l'une quelconque des revendications précédentes.

7. Procédé de production d'une dispersion aqueuse de pigment selon la revendication 6, comprenant :
l'addition d'une solution aqueuse contenant une substance basique à un mélange contenant le pigment (A), le dispersant de pigment (B) et un solvant organique (C) pour dissoudre ou disperser le dispersant de pigment (B) ; et
l'élimination du solvant organique (C) pour obtenir la dispersion.

8. Composition d'encre comprenant la dispersion aqueuse de pigment selon la revendication 6.

9. Jeu d'encre comprenant :
la composition d'encre selon la revendication 8 ; et
un liquide de traitement contenant un constituant d'agrégation pour agréger des constituants dans la composition d'encre.

10. Procédé de formation d'une image comprenant :
l'application de la composition d'encre selon la revendication 8 sur un support d'enregistrement ; et
l'application d'un liquide de traitement contenant un constituant d'agrégation pour agréger des constituants dans la composition d'encre sur le support d'enregistrement.
